# EUROPÄISCHE PATENTSCHRIFT

(11) **EP 2 197 964 B1**
(45) Veröffentlichungstag und Bekanntmachung des Hinweises auf die Patenterteilung: **02.03.2011**
(21) Anmeldenummer: 08804033.2
(22) Anmeldetag: 11.09.2008
(51) Int. Cl.: C09D 129/04, C08L 101/00, C09D 5/22, C08J 3/00

(54) **MIT FLUORESZENZFARBSTOFFEN MARKIERTE, PIGMENTFREIE, WÄSSRIGE POLYMERDISPERSIONEN, VERFAHREN ZU IHRER HERSTELLUNG UND IHRE VERWENDUNG**
PIGMENT-FREE AQUEOUS POLYMERIC DISPERSIONS LABELLED WITH FLUORESCENT DYES, PRODUCTION OF SAID POLYMER DISPERSIONS AND THEIR USE
DISPERSIONS POLYMÈRES AQUEUSES, SANS PIGMENTS, MARQUÉES AVEC DES COLORANTS FLUORESCENTS, LEUR PROCÉDÉ DE PRÉPARATION ET LEUR UTILISATION

(30) Priorität: 09.10.2007 EP 07118116
(43) Veröffentlichungstag der Anmeldung: 23.06.2010
(73) Patentinhaber: BASF SE, 67056 Ludwigshafen (DE)
(72) Erfinder: KOPLIN, Tobias Joachim, 67063 Ludwigshafen (DE); REIMERS,Oliver, 69469 Weinheim (DE); NORD, Simon, 76189 Karlsruhe (DE); LAWRENZ, Dirk, 67454 Hassloch (DE); BIRKERT, Oliver, 67136 Fussgönnheim (DE); GEISSLER, Ulrike, 85540 Haar (DE)
(86) Internationale Anmeldenummer: PCT/EP2008/062068
(87) Internationale Veröffentlichungsnummer: WO 2009/047076

(56) Entgegenhaltungen:
- EP-A- 1 092 416
- EP-A- 1 191 041
- EP-A- 1 801 127
- WO-A-99/21937
- US-A1- 2002 132 900

## Beschreibung

### Gebiet der Erfindung

Die vorliegende Erfindung betrifftmit Fluoreszenzfarbstoffen markierte, pigmentfreie, wässrige Polymerdispersionen. Außerdem betrifft die vorliegende Erfindung ein Verfahren zur Herstellung von mit Fluoreszenzfarbstoffen markierten, pigmentfreien, wässrigen Polymerdispersionen. Nicht zuletzt betrifft die vorliegende Erfindung die Verwendung der mit Fluoreszenzfarbstoffen markierten, pigmentfreien, wässrigen Polymerdispersionen und der nach dem Verfahren hergestellten, mit Fluoreszenzfarbstoffen markierten, wässrigen Polymerdispersionen.

### Stand der Technik

Wässrige Dispersionen, die in Wasser dispergierbare Polymerpartikel, die eine durch Lichtstreuung ermittelte volumenmittlere Teilchengröße von 1 bis 100 µm aufweisen und einen Fluoreszenzfarbstoff enthalten, sind aus der europäischen Patentanmeldung EP 1 801 127 A1 bekannt. Bekanntermaßen sind sie erhältlich durch radikalische Suspensionspolymerisation von ethylenisch ungesättigten Monomeren in einer Öl-in-Wasser-Emulsion, deren disperse Phase mindestens einen Fluoreszenzfarbstoff gelöst enthält. Vorzugsweise wird die Suspensionspolymerisation in der Gegenwart von Schutzkolloiden wie Cellulosederivate oder Polyvinylalkohole durchgeführt.

Bekanntermaßen werden die Schutzkolloide in Schlaufen an der Teilchenoberfläche der betreffenden Polymerpartikel absorbiert (vgl. Römpp Online 2007, »Schutzkolloid«). In einer wässrigen Dispersion, die zusätzlich noch andere Polymere, insbesondere Polymerpartikel, enthält, weisen die Schutzkolloide daher im Allgemeinen keine verdickende Wirkung mehr auf.

Aus der EP 1 801 127 A1 sind außerdem Papierstreichfarben bekannt, die eine Viskosität von 1000 mPas aufweisen, wobei nicht angegeben ist, in welcher Weise die Viskosität gemessen worden ist. Die Papierstreichfarben enthalten große Mengen an anorganischen Pigmenten sowie geringe Mengen eines Styrol-Butadien-Bindemittels und eines Verdickungsmittels sowie geringe Mengen an Polymerpartikeln, die mindestens einen Fluoreszenzfarbstoff enthalten. Die Papierstreichfarben werden hergestellt, indem man ihre Bestandteile in einem Rührgefäß miteinander vermischt. Ob zu diesem Zweck zuvor pigmentfreie, wässrige Dispersionen separat hergestellt werden, die bereits Styrol-Butadien-Bindemittel sowie mindestens einen Fluoreszenzfarbstoff enthaltende Polymerpartikel und ein Verdickungsmittel aufweisen, ist nicht bekannt. Welche Eigenschaften diese stoffliche Unterkombinationen für sich gesehen aufweisen könnte, geht somit aus der EP 1 801 127 A1 nicht hervor.

Aus der EP 1 801 127 A1 ist des Weiteren ein pigmentfreies Papierleimungsmittel bekannt, das erhalten wird, indem man wässrige Dispersionen, enthaltend Polymerpartikel, die mindestens einen Fluoreszenzfarbstoff enthalten, mit einer Standarddispersion von Acrylatcopolymerisaten abmischt und die resultierende Mischung in eine wässrige Stärkelösung einrührt, wobei das Verhältnis synthetisches Produkt zu Stärke bei etwa 1 : 100 liegt. Die Stärke liegt somit in einem sehr großen Überschuss vor und nicht in einer Konzentration, wie sie üblicherweise bei Verdickungsmitteln angewandt wird. Außerdem wird das Verhältnis von Polymerpartikeln, die mindestens einen Fluoreszenzfarbstoff enthalten, zu den Polymerpartikeln der Standarddispersion nicht angegeben.

Bei der Herstellung von funktionalen Produkten, wie zum Beispiel Beschichtungsstoffe, Klebstoffe, Dichtungsmassen, Druckfarben, Papierstreichmassen oder Papierleimungsmittel, die mit mindestens einem Fluoreszenzfarbstoff markiert sind, wäre es von großem Vorteil pigmentfreie, wässrige Polymerdispersionen, die mit Fluoreszenzfarbstoffen markiert sind und in Wasser lösliche und/oder dispergierbare Polymere und in Wasser dispergierbare, mindestens einen Fluoreszenzfarbstoff enthaltende Polymerpartikel aufweisen, auf Vorrat zur Verfügung zu haben, um sie nach Bedarf auch an unterschiedlichen Orten zu unterschiedlichen Verwendungszwecken und/oder zu unterschiedlichen Zeiten einsetzen zu können. Dadurch könnte bei der Herstellung der betreffenden funktionalen Produkte vor Ort mindestens ein Mischungsschritt eingespart werden, was ein großer wirtschaftlicher und technischer Vorteil wäre.

Dies setzt aber voraus, dass die betreffenden mit Fluoreszenzfarbstoffen markierten, pigmentfreien wässrigen Polymerdispersionen eine hohe Dauerstabilität aufweisen und insbesondere während mindestens 1,5 Monaten bei der Lagerung in der Ruhe kein Absetzen der Polymerpartikel zeigen. Zwar ließe sich dies noch durch die Zugabe von Verdickungsmitteln erreichen, indes bietet die einfache Erhöhung der Viskosität keine befriedigende Lösung, weil die betreffenden, mit Fluoreszenzfarbstoffen markierten, pigmentfreien, wässrigen Polymerdispersionen auch noch pumpfähig bleiben müssen, damit sie in den Anlagen zur Herstellung der oben genannten funktionalen Produkte ohne zu hohen Energieaufwand gehandhabt werden können. Außerdem müssen die betreffenden mit Fluoreszenzfarbstoffen markierten, pigmentfreien, wässrigen Polymerdispersionen auch noch bei der Scherung, wie sie beim Pumpen zwangsweise erfolgt, stabil bleiben und nicht ausflocken.

Die EP 1 801 127 A1 liefert aber keine Anregungen und Hinweise, wie diese Probleme gelöst werden könnten.

Aus der europäischen EP 1 191 041 A1 sind wässrige Polymerdispersionen bekannt, die dispergierte Polymerpartikel, die mindestens einen Fluoreszenzfarbstoff enthalten und einen mittleren Teilchendurchmesser d₅₀ <1 µm aufweisen. Die Viskosität der bekannten wässrigen Polymerdispersionen liegt gemäß Seite 15, Tabelle 1, von EP 1 191 041 A1 bei 3,7 mPas. Des Weiteren handelt es sich bei den aus EP 1 191 041 A1, Seite 16, Absatz [0102], bis Seite 28, Absatz [0163], beschriebenen Kosmetika nicht um wässrige Polymerdispersionen, sondern um feste oder cremeförmige Formulierungen.

Aus der europäischen Patentanmeldung EP 1 092 416 A1 sind wässrige Polymerdispersionen bekannt, deren dispergierte Polymerpartikel mindestens einen Fluoreszenzfarbstoff enthalten und ebenfalls nur einen mittleren Teilchendurchmesser d₅₀ <1 µm aufweisen. Des Weiteren weisen die aus EP 1 092 416 A1, Seite 19, Tabelle 2, bekannten wässrigen Polymerdispersionen 11 bis 19 lediglich eine Viskosität von 3,4 bis 3,9 mPas auf.

Weder die EP 1 191 041 A1 noch die EP 1 092 416 A1 liefern Anregungen und Hinweise, wie diese Probleme gelöst werden könnten.

### Aufgabe

Der vorliegenden Erfindung lag daher die Aufgabe zu Grunde, eine mit Fluoreszenzfarbstoffen markierte, pigmentfreie, wässrige Polymerdispersion bereitzustellen, die
(A) mindestens eine Art von in Wasser löslichen und/oder dispergierbaren Polymeren und
(B) mindestens eine Art von in Wasser dispergierbaren Polymerpartikeln, die mindestens einen Fluoreszenzfarbstoff enthalten,
   enthält und die eine hohe Dauerstabilität verbunden mit einer hervorragenden Pumpbarkeit aufweist. Insbesondere soll die mit Fluoreszenzfarbstoffen markierte, pigmentfreie, wässrige Polymerdispersion bei der Lagerung in der Ruhe während mindestens 1,5 Monaten kein Absetzen zeigen. Außerdem soll sie ohne großen Energieaufwand gehandhabt, insbesondere gepumpt, werden können, ohne dass es bei der Scherung zum Ausflocken kommt. Dadurch soll es möglich werden, die mit Fluoreszenzfarbstoffen markierte, pigmentfreie, wässrige Polymerdispersion auf Vorrat zur Verfügung zu halten, um sie je nach Bedarf auch an unterschiedlichen Orten zu unterschiedlichen Verwendungszwecken und/oder zu unterschiedlichen Zeiten einsetzen zu können. Dadurch soll es möglich werden, bei der Herstellung von funktionalen Produkten, wie Beschichtungsstoffe, Klebstoffe, Dichtungsmassen, Druckfarben, Papierstreichmassen oder Papierleimungsmittel, vor Ort mindestens einen Mischungsschritt einzusparen, was ein großer wirtschaftlicher und technischer Vorteil ist. Nicht zuletzt soll die mit Fluoreszenzfarbstoffen markierte, pigmentfreie, wässrige Polymerdispersion in einfacher Weise mit effektgebenden Zusatzstoffen, insbesondere mit effektgebenden Pigmenten, vermischt werden können, ohne dass es dabei zum Ausflocken von Bestandteilen kommt.

Außerdem war es die Aufgabe der vorliegenden Erfindung, ein Verfahren zur Herstellung einer mit Fluoreszenzfarbstoffen markierten, effektgebenden, wässrigen Polymerdispersion, die
(A) mindestens eine Art von in Wasser löslichen und/oder dispergierbaren Polymeren,
(B) mindestens eine Art von in Wasser dispergierbaren Polymerpartikeln, die mindestens einen Fluoreszenzfarbstoff enthalten, und
(C) mindestens einen effektgebenden Zusatzstoff
   enthält, bereitzustellen. Das Verfahren soll mit vergleichsweise geringem Energieaufwand und verfahrenstechnischem Aufwand, insbesondere mit weniger Mischungsschritten, durchgeführt werden können. Außerdem soll es das Verfahren ermöglichen, die mit Fluoreszenzfarbstoffen markierte, pigmenthaltige, wässrige Polymerdispersion je nach Bedarf auch an unterschiedlichen Orten, zu unterschiedlichen Verwendungszwecken und/oder zu unterschiedlichen Zeiten herzustellen.

### Erfindungsgemäße Lösung

Demgemäß wurde die mit Fluoreszenzfarbstoffen markierte, pigmentfreie, wässrige Polymerdispersion mit einer mithilfe der Brookfield-Methode (Spindel 3, 23°C) ermittelten Viskosität von 500 bis 900 mPas, bestehend aus Wasser sowie aus einem Festkörper, bestehend aus
(A) 1 bis 99 Gew.-% mindestens einer Art von dispergierten Polymerpartikeln mit einer durch Lichtstreuung ermittelten volumenmittleren Teilchengröße von 0,01 bis 1 µm,
(B) 1 bis 20 Gew.-% mindestens einer Art von dispergierten Polymerpartikein mit einer durch Lichtstreuung ermittelten volumenmittleren Teilchengröße von 1 bis 100 µm, die mindestens einen Fluoreszenzfarbstoff enthalten, und
(C) 0,001 bis 3 Gew.-% mindestens eines Verdickungsmittels, sowie
(D) mindestens einem die wässrige Polymerdispersion stabilisierenden Zusatzstoff, ausgewählt aus der Gruppe, bestehend aus Hydrophoben, oberflächenaktiven Verbindungen, Schutzkolloiden, Mitteln zur Einstellung des pH-Wertes, Lichtschutzmitteln, UV-Adsorbern, niedrig und hochsiedenden organischen Lösemitteln, Polymerisationsinhibitoren und Antischaummitteln.,
   gefunden, die im Folgenden als »erfindungsgemäße Polymerdispersion« bezeichnet wird.

Außerdem wurde das Verfahren zur Herstellung einer efindungsgemäßen Polymerdispersion gefunden, bei dem man, bezogen auf den Festkörper der Polymerdispersion,
(A) 1 bis 99 Gew.-% mindestens einer Art von dispergierten Polymerpartikeln mit einer durch Lichtstreuung ermittelten volumenmittleren Teilchengröße von 0,01 bis 1 µm,
(B) 1 bis 20 Gew.-% mindestens einer Art von dispergierten Polymerpartikeln mit einer durch Lichtstreuung ermittelten volumenmittleren Teilchengröße von 1 bis 100 µm, die mindestens einen Fluoreszenzfarbstoff enthalten, und
(C) 0,001 bis 3 Gew.-% mindestens eines Verdickungsmittels, sowie
(D) mindestens einen die wässrige Polymerdispersion stabilisierenden Zusatzstoff, ausgewählt aus der Gruppe, bestehend aus Hydrophoben, oberflächenaktiven Verbindungen, Schutzkolloiden, Mitteln zur Einstellung des pH-Wertes, Lichtschutzmitteln, UV-Adsorbern, niedrig und hochsiedenden organischen Lösemitteln, Polymerisationsinhibitoren und Antischaummitteln
   in Wasser homogen vermischt und das im Folgenden als »erfindungsgemäßes Herstellverfahren I« bezeichnet wird.

Des Weiteren wurde die Verwendung der erfindungsgemäßen Polymerdispersion und der nach dem erfindungsgemäßen Verfahren hergestellten erfindungsgemäßen Polymerdispersion als markierte, flüssige funktionale Produkte und zur Herstellung von markierten, flüssigen, festen pulverförmigen und festen kompakten funktionalen Produkten, die mindestens einen von den stabilisierenden Zusatzstoffen (D) verschiedenen effektgebenden Zusatzstoff (E) enthalten, gefunden, was im Folgenden als »erfindungsgemäße Verwerdung« bezeichnet wird.

Nicht zuletzt wurde das Verfahren zur Herstellung von markierten, flüssigen, festen pulverförmigen und festen kompakten funktionalen Produkten, die mindestens einen effektgebenden Zusatzstoff (E) enthalten, gefunden bei dem man eine erfindungsgemäße Polymerdispersion oder eine nach dem erfindungsgemäßen Herstellverfahren I hergestellte erfindungsgemäße Polymerdispersion mit mindestens einem effektgebenden Zusatzstoff (E) homogen vermischt, wodurch ein markiertes, flüssiges, mindestens einen effektgebenden Zusatzstoff (E) enthaltendes funktionales Produkt oder Zwischenprodukt resultiert.

Im Folgenden wird das Verfahren zur Herstellung von markierten, flüssigen, festen pulverförmigen und festen kompakten funktionalen Produkten, die mindestens einen effektgebenden Zusatzstoff (E) enthalten, als »erfindungsgemäßes Herstellverfahren II« bezeichnet.

Die Ausführungsformen sind durch die Ansprüchen definiert.

### Vorteile der Erfindung

Im Hinblick auf den Stand der Technik war es überraschend und für den Fachmann nicht vorhersehbar, dass die Aufgabe der vorliegenden Erfindung mithilfe der erfindungsgemäßen Polymerdispersion, des erfindungsgemäßen Herstellverfahrens I, der erfindungsgemäßen Verwendung und des erfindungsgemäßen Herstellverfahrens II gelöst werden konnte.

Insbesondere war es überraschend, dass die erfindungsgemäße Polymerdispersion eine besonders hohe Dauerstabilität verbunden mit einer hervorragenden Pumpbarkeit aufwies. Dabei zeigte die erfindungsgemäße Polymerdispersion bei der Lagerung in der Ruhe während mindestens 1,5 Monaten, bevorzugt während mindestens 6 Monaten und insbesondere während 12 Monaten kein Absetzen. Sie konnte ohne großen Energieaufwand insbesondere in Ringleitungen von Produktionsanlagen vorzugsweise mit Zahnradpumpen umgepumpt werden, ohne dass es bei der dabei erfolgenden Scherung zum Ausflocken kam.

Die erfindungsgemäße Polymerdispersion konnte ganz besonders vorteilhaft in einfacher Weise mithilfe des erfindungsgemäßen Herstellverfahrens I hergestellt werden. Dabei war die Reproduzierbarkeit einer gegebenen erfindungsgemäßen Polymerdispersion bei der mehrfachen Durchführung des erfindungsgemäßen Herstellverfahrens I hervorragend. Dadurch wurde es möglich, die erfindungsgemäße Polymerdispersion in großen Mengen herzustellen.

Somit konnte die erfindungsgemäße Polymerdispersion, insbesondere die nach dem erfindungsgemäßen Verfahren hergestellte, in großen Mengen auf Vorrat zur Verfügung gehalten werden und sie konnte je nach Bedarf auch an unterschiedlichen Orten zu unterschiedlichen Verwendungszwecken, insbesondere aber für die erfindungsgemäße Verwendung, und/oder zu unterschiedlichen Zeiten eingesetzt werden.

In der erfindungsgemäßen Verwendung zeigte sich die hervorragende Brauchbarkeit der erfindungsgemäßen Polymerdispersionen.

So konnten sie mit Vorteil als markierte, flüssige funktionale Produkte wie Markierungsmittel, Beschichtungsstoffe, Klebstoffe, Dichtungsmassen, Druckfarben, Papierstreichmassen, Papierleimungsmittel und Ausgangsprodukte zur Herstellung von Formteilen und Folien verwendet werden.

Außerdem konnten sie mit Vorteil für die Herstellung von markierten, flüssigen, festen pulverförmigen und festen kompakten funktionalen Produkten, die mindestens einen effektgebenden Zusatzstoff (E) enthielten, wie Markierungsmittel, Beschichtungsstoffe, Klebstoffe, Dichtungsmassen, Druckfarben, Papierstreichmassen, Papierleimungsmittel, Ausgangsprodukte zur Herstellung von Formteilen und Folien, Katalysatoren, Formulierungen von Pflanzenschutzmitteln und kosmetische und pharmazeutische Formulierungen, eingesetzt werden.

Dabei erwies es sich als ein ganz besonderer Vorteil, dass die funktionalen Produkte, die mindestens einen effektgebenden Zusatzstoff (E) enthielten, bedarfsgerecht zu den jeweils gewünschten Zeiten an den gewünschten Orten, wo geeignete Anlagen zur Verfügung standen, in den gewünschten Mengen aus den erfindungsgemäßen Polymerdispersionen nach dem erfindungsgemäßen Herstellverfahren II hergestellt werden konnten. Dabei erwies es sich als ein zusätzlicher besonderer Vorteil, dass bei dem erfindungsgemäßen Herstellverfahren II weniger Mischungsschritte notwendig waren als bei bekannten Herstellverfahren.

Wegen ihres Gehalts an Fluoreszenzfarbstoffen konnte die Authentizität der erfindungsgemäßen Polymerdispersionen und der hieraus hergestellten funktionalen Produkte sowie deren Folgeprodukte, wie z.B. markierte Treibstoffe, Beschichtungen, Klebschichten, Dichtungen, bedruckte Substrate, veredelte Papierprodukte, Katalysatoren, Pflanzenschutzmittel, Kosmetika und Arzneimittel, in einfacher Weise rasch überprüft werden.

### Ausführliche Beschreibung der Erfindung

Die erfindungsgemäße Polymerdispersion ist mit Fluoreszenzfarbstoffen markiert. »Markiert« bedeutet, dass die Fluoreszenzfarbstoffe dauerhaft mit dem Festkörper der Polymerdispersion verbunden sind und vorzugsweise in einer Konzentration vorliegen, dass sie mit dem bloßen Auge erkennbar sind oder mithilfe geeigneter spektroskopischer Methoden, wie z.B. die Fluoreszenzspektroskopie, detektiert werden können. Beispiele geeigneter Fluoreszenzfarbstoffe zur Verwendung in der erfindungsgemäßen Polymerdispersion werden nachstehend im Detail beschrieben.

Hier und im Folgenden ist unter Festkörper die Summe aller Bestandteile der erfindungsgemäßen Polymerdispersion zu verstehen, die nach dem vollständigen Entfernen von flüchtigen Bestandteilen, wie zum Beispiel Wasser oder organische Lösemittel, als Rückstand, der vorzugsweise fest und im Temperaturbereich von Raumtemperatur bis vorzugsweise 250°C nicht flüchtig ist, zurückbleiben.

Die erfindungsgemäße Polymerdispersion ist pigmentfrei. Dies bedeutet, dass sie allenfalls Spuren von üblichen und bekannten Pigmenten, Füllstoffen und Nanopartikeln enthält, die die physikalischen und chemischen Eigenschaften der erfindungsgemäßen Polymerdispersion nicht oder nur unwesentlich beeinflussen.

Die erfindungsgemäße Polymerdispersion ist wässrig. Im Rahmen der vorliegenden Erfindung bedeute dies, dass Wasser oder ein flüssiges wässriges Medium, das im Wesentlichen aus Wasser besteht, die kontinuierliche Phase der Dispersion bildet. Dabei weist der Begriff »im Wesentlichen« darauf hin, dass die chemischen und physikalischen Eigenschaften des flüssigen wässrigen Mediums hauptsächlich von Wasser bestimmt werden.

Die erfindungsgemäße Polymerdispersion weist bei 23°C eine mit der Brookfield-Methode mit der Spindel Nr. 3 gemessene Viskosität von 500 bis 900 mPas insbesondere 550 bis 700 mPas, auf.

Die Drehzahl der Spindel bei der Messung der Brookfield-Viskosität kann variieren und richtet sich nach der erwarteten Viskosität, so dass der Fachmann die jeweils geeignete Viskosität aufgrund seines allgemeinen Fachwissens einstellen kann. Vorzugsweise werden im Falle des erfindungsgemäßen Viskositätsbereichs die Messung mit 100 U/min durchgeführt.

Die erfindungsgemäße Polymerdispersion besteht aus Wasser sowie aus einem Festkörper.

Der Festkörper wiederum besteht aus den nachstehend im Detail beschriebenen Bestandteilen (A), (B), (C) und (D).

Der Festkörper enthält, jeweils bezogen auf den Festkörper, 1 bis 99 Gew.-%, vorzugsweise 20 bis 98 Gew.-% und insbesondere 30 bis 97 Gew.-% mindestens einer, insbesondere einer, Art von in Wasser löslichen und/oder dispergierbaren Polymeren (A). Insbesondere werden in Wasser dispergierbare Polymere (A) verwendet, die in der erfindungsgemäßen Polymerdispersion in der Form von dispergierten Polymerpartikeln (A) vorliegen.

Die Teilchengröße der Polymerpartikel (A) kann breit variieren und daher den Erfordernissen des Einzelfalls optimal angepasst werden. Vorzugsweise sind die Teilchengrößen der Polymerpartikel (A) kleiner als die Teilchengrößen der Polymerpartikel (B). Insbesondere weisen die Polymerpartikel (A) eine durch Lichtstreuung ermittelte volumenmittlere Teilchengröße von 0,01 bis 1 µm auf.

Geeignete Methoden zur Bestimmung der volumenmittleren Teilchengröße mithilfe der Lichtstreuung sind beispielsweise aus der europäischen Patentanmeldung EP 1 801 127 A1, Seite 9, Absatz [0052], und Seite 11, Absatz [0064], bekannt.

Als Polymere (A) kommen im Grunde alle Polymeren in Betracht, die in Wasser löslich oder dispergierbar, insbesondere dispergierbar, sind, ohne dass sie sich dabei zersetzen und/oder mit den anderen Bestandteilen der erfindungsgemäßen Polymerdispersion in unerwünschter Weise in Wechselwirkung treten. Dies bedeutet, dass sie hiermit beispielsweise keine chemischen Reaktionen eingehen oder Ausflockungen bilden.

Vorzugsweise werden die Polymeren (A) aus der Gruppe, bestehend aus statistisch, alternierend und blockartig aufgebauten, linearen, verzweigten und kammartig aufgebauten (Co)Polymerisaten von ethylenisch ungesättigten Monomeren, Polyadditionsharzen und Polykondensationsharzen, die gegebenenfalls durch physikalische Trocknung, thermische Härtung und/oder Härtung mit aktinischer Strahlung dreidimensional vernetzbar sind, ausgewählt.

Zu den Begriffen (Co)Polymerisate, Polyadditionsharze und Polykondensationsharze wird auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, »Bindemittel«, verwiesen.

Im Rahmen der vorliegenden Erfindung bedeutet der Begriff »physikalische Trocknung« die Härtung einer Schicht, die mindestens ein Polymer (A) und mindestens ein Lösemittel enthält, durch Verfilmung durch Lösemittelabgabe aus der Schicht, wobei die Verknüpfung innerhalb der Schicht über Schlaufenbildung der Polymermoleküle (A) erfolgt. Oder aber die Verfilmung erfolgt über die Koaleszenz der Polymerpartikel (A) (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig.

Die thermische Härtung erfolgt im Allgemeinen durch die thermisch initiierte und aufrechterhaltene Reaktion komplementärer reaktiver funktioneller Gruppen, die allesamt in dem Polymeren (A) enthalten sein können; in einem solchen Fall spricht man von einem selbstvernetzenden Polymeren (A). Es können aber eine Art von reaktiven funktionellen Gruppen in dem Polymeren (A) und die hierzu komplementären reaktiven funktionellen Gruppen in einem thermisch härtbaren Vernetzungsmittel (E) vorliegen; in diesem Falle spricht man von einem fremdvemetzenden Polymeren (A).

Beispiele geeigneter komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R¹ und R² stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

| **Bindemittel** | **und** | **Vemetzungsmittel** |
|---|---|---|
| | **oder** | |
| **Vemetzungsmittel** | **und** | **Bindemittel** |
| -SH | | -C(O)-OH |
| -NH₂ | | -C(O)-O-C(O)- |
| -OH | | -NCO |
| -O-(CO)-NH-(CO)-NH₂ | | -NH-C(O)-OR |
| -O-(CO)-NH₂ | | -CH₂-OH |
| >NH | | -CH₂-O-R |
| | | -NH-CH₂-O-R |
| | | -NH-CH₂-OH |
| | | -N(-CH₂-O-R)₂ |
| | | -NH-C(O)-CH(-C(O)OR)₂ |
| | | -NH-C(O)-CH(-C(O)OR)(-C(O)-R) |
| | | -NH-C(O)-NR¹R² |
| | | > Si(OR)₂ |
| | | 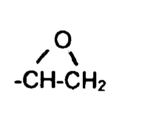 |
| | | 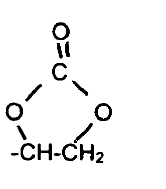 |
| -C(O)-OH | | 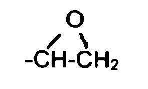 |
| | | 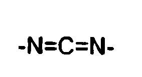 |
| | | -C(O)-N(CH₂-CH₂-OH)₂ |

Die Auswahl der jeweiligen komplementären Gruppen richtet sich zum einen danach, 5 dass sie bei der Herstellung, der Lagerung, der weitere Verarbeitung und der Verwendung der erfindungsgemäßen Polymerdispersion keine unerwünschten Reaktionen, insbesondere keine vorzeitige Vernetzung, eingehen dürfen und/oder gegebenenfalls die Härtung mit aktinischer Strahlung nicht stören oder inhibieren dürfen, und zum anderen danach, in welchem Temperaturbereich die Vernetzung stattfinden soll.

Im Falle fremdvernetzender Polymere (A) werden vorzugsweise Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte Isocyanat-, Urethan- oder Alkoxymethylaminogruppen, andererseits angewandt.

Im Falle selbstvernetzender Polymere (A) werden insbesondere Methylol-, Methylolether- und/oder N-Alkoxymethylaminogruppen verwendet.

Im Rahmen der vorliegenden Erfindung ist unter »aktinischer Strahlung« elektromagnetische Strahlung, wie nahes Infrarot (NIR), sichtbares Licht, UV-Strahlung, Röntgenstrahlung und Gammastrahlung, insbesondere UV-Strahlung, oder Korpuskularstrahlung, wie Elektronenstrahlung, Betastrahlung, Alphastrahlung, Neutronenstrahlung oder Protonenstrahlung, insbesondere Elektronenstrahlung, zu verstehen.

Die Härtung mit aktinischer Strahlung erfolgt im Allgemeinen über Bindungen, die mit aktinischer Strahlung aktivierbar sind und in den Polymeren (A) enthalten sind. Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff Sauerstoff-, Kohlenstoff-Stickstoff-, Kohlenstoff-Phosphor- oder Kohlenstoff-Silizium-Einzelbindungen oder -Doppelbindungen. Von diesen werden die Doppelbindungen, insbesondere die Kohlenstoff-Kohlenstoff-Doppelbindungen (nachstehend "Doppelbindungen" genannt), bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb ganz besonders bevorzugt verwendet.

Beispiele geeigneter (Co)Polymerisate (A) sind (Meth)Acrylat(co)polymerisate, Butadien(co)polymerisate oder partiell verseifte Polyvinylester, insbesondere (Meth)Acrylatcopolymerisate und Butadiencopolymerisate.

Beispiele geeigneter Polyadditionsharze und/oder Polykondensationsharze (A) sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester.

Von diesen Polymeren (A) weisen die (Meth)Acrylatcopolymerisate und Butadiencopolymerisate (A) besondere Vorteile auf und werden deshalb besonders bevorzugt verwendet.

Beispiele geeigneter ethylenisch ungesättigter Monomere (a) für die Herstellung der (Meth)Acrylatcopolymerisate und Butadiencopolymerisate (A) sind
- (a1): Monomere, welche mindestens eine Hydroxyl-, Amino-, Alkoxymethylamino-, Carbamat-, Allophanat-, lsocyanat-, Epoxid- oder Iminogruppe pro Molekül tragen, wie
- (a11): Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, - fumarat oder -itaconat; oder Hydroxycycloalkylester wie 1,4- Bis(hydroxymethyl)cyclohexan-, Octahydro-4,7-methano-1 H-inden- dimethanol- oder Methylpropandiolmonoacrylat, -monomethacrylat, - monoethacrylat, -monocrotonat, -monomaleinat, -monofumarat oder - monoitaconat; Umsetzungsprodukte aus cyclischen Estern, wie z.B. epsilon-Caprolacton und diesen Hydroxyalkyl- oder -cycloalkylestern;
- (a12): ethylenisch ungesättigte Alkohole wie Allylalkohol;
- (a13): Polyole wie Trimethylolpropanmono- oder -diallylether oder Pentaerythritmono-, -di- oder -triallylether;
- (a14): Umsetzungsprodukte aus Acrylsäure undloder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalente Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- (a15): Aminoethylacrylat, Aminoethylmethacrylat, Allylamin oder N- Methyliminoethylacrylat;
- (a16): N,N-Di(methoxymethyl)aminoethylacrylat oder -methacrylat oder N,N- Di(butoxymethyl)aminopropylacrylat oder -methacrylat;
- (a17): (Meth)Acrylsäureamide wie (Meth)Acrylsäureamid, N-Methyl-, N- Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
- (a18): Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A- 3,479,328, US-A-3,674,838, US-A- 4,126,747, US-A- 4,279,833 oder US-A-4,340,497 beschrieben; und/oder
- (a19): Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)Acrylsäure und/oder Hydroxyalkyl- und/oder -cycloalkylestern der (Meth)Acrylsäure und/oder weiterer hydroxylgruppenhaltiger Monomere (a1).
- (a110): Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.
- (a2): Monomere, welche mindestens eine Säuregruppe pro Molekül tragen, wie
- (a21): Acrylsäure, beta-Carboxyethylacrylat, Methacrylsäure, Ethacrylsäure, Crotonsäure, Maleinsäure, Fumarsäure, Aconitsäure oder Itaconsäure;
- (a22): ethylenisch ungesättigte Sulfon- oder Phosphonsäuren oder deren Teilester, wie z.B. Vinylsulfonsäure oder Vinylphosphonsäure;
- (a23): Maleinsäuremono(meth)acryloyloxyethylester, Bernsteinsäuremo- no(meth)acryloyloxyethylester oder Phthalsäuremo- no(meth)acryloyloxyethylester; oder
- (a24): Vinylbenzoesäure (alle Isomere), alpha-Methylvinylbenzoesäure (alle Isomere) oder Vinylbenzolsulfonsäure (alle Isomere); sowie
- (a3): Monomere, die im Wesentlichen oder völlig frei von reaktiven funktionellen Gruppen sind, wie
- (a31): im wesentlichen säuregruppenfreie (Meth)Acrylsäureester wie (Meth)Acrylsäurealkyl- oder -cycloalkylester mit bis zu 20 Kohlenstoffatomen im Alkylrest, insbesondere Methyl-, Ethyl-, n-Propyl-, n-Butyl-, sec.-Butyl-, tert.-Butyl-, Hexyl-, Ethylhexyl-, Stearyl- und Laurylacrylat oder -methacrylat; cycloaliphatische (Meth)acryl- säureester, insbesondere Cyclohexyl-, Isobornyl-, Dicyclopentadienyl-, Octahydro-4,7-methano-1H-inden-methanol- oder tert.- Butylcyclohexyl(meth)acrylat; (Meth)Acrylsäureoxaalkylester oder - oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (31) dieser Art sind aus der Offenlegungsschrift DE 196 25 773 A1, Spalte 3, Zeile 65, bis Spalte 4, Zeile 20, bekannt). Diese können in untergeordneten Mengen höherfunktionelle (Meth)Acrylsäurealkyl- oder -cyctoalkytester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden- dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren (a31) solche Mengen zu verstehen, welche nicht zur Vernetzung oder Gelierung der Copolymerisate führen, es sei denn, sie sollen in der Form von vernetzten Partikeln vorliegen.
- (a32): Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Düsobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Mono- carbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).
- (a33): Diarylethylene, insbesondere solche der allgemeinen Formel 1: R¹R²C=CR³R⁴ (I), worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2- Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl- cyclohexan. Beispiele geeigneter Cycloalkylalkylreste sind 2-, 3- oder 4- Methyl-, -Ethyl-, -Propyl- oder -Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3- oder 4- Phenylcyclohex-1-yl. Beispiele geeigneter Arylalkylreste sind 2-, 3- oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten R¹, R², R³ und/oder R⁴ um Phenyl- oder Naphthylreste, insbesondere Phenylreste. Die in den Resten R¹, R², R³ und/oder R⁴ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans-Stilben oder Vinyliden-bis(4-nitrobenzol), insbesondere Diphenylethylen (DPE), weswegen sie bevorzugt verwendet werden. Im Rahmen der vorliegenden Erfindung werden die Monomeren (a33) eingesetzt, um die Copolymerisation in vorteilhafter Weise derart zu regeln, dass auch eine radikalische Copolymerisation in Batch-Fahrweise möglich ist.
- (a34): Vinylaromatische Kohlenwasserstoffe wie Styrol, Vinyltoluol, Diphenylethylen oder alpha-Alkylstyrole, insbesondere alpha- Methylstyrol.
- (a35): Nitrile wie Acrylnitril und/oder Methacrylnitril.
- (a36): Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N- Vinylpyrrolidon; 1-Vinylimidazol; Vinylether wie Ethylvinylether, n- Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2- Methyl-2-ethylheptansäure.
- (a37): Allylverbindungen, insbesondere Allylether und -ester wie Allylmethyl-, - ethyl-, -propyl- oder -butylether oder Allylacetat, -propionat oder -butyrat.
- (a38): Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind; und
- (a39): Olefine wie Ethylen, Propylen, But-1-en, Pent-1-en, Hex-1-en, Cyclohexen, Cyclopenten, Norbornen, Butadien, Isopren, Cylopentadien und/oder Dicyclopentadien.

Es versteht sich von selbst, dass für die Herstellung der (Meth)Acrylatcopolymerisate und die vorstehend aufgeführten Monomere (a) so ausgewählt werden, dass die (Meth)Acrylatcopolymerisate (A) so viel an einpolymerisierten (Meth)Acrylatmonomeren (a) enthalten, dass ihr Eigenschaftsprofil in erster Linie von diesen Monomeren bestimmt wird. Im Allgemeinen ist dies bei einem Gehalt >50 Mol%, vorzugsweise >60 Mol%, jeweils bezogen auf das (Meth)Acrylatcopolymerisat (A), der Fall.

Für die Herstellung der Butadiencopolymerisate (A) kann das Gewichtsverhältnis von Butadien (a) zu Comonomeren (a) sehr breit variiert werden und beispielsweise im Falle vinylaromatischer Comonomere (a34) bei 10 : 90 bis 90 : 10, vorzugsweise 20 : 80 bis 80 : 20, liegen.

Höherfunktionelle Monomere (a) der vorstehend beschriebenen Art werden im Allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der (Meth)Acrylatcopolymerisate oder der Butadiencopolymerisate (A) führen, es sei denn, man will gezielt vernetzte Polymerpartikel (A) herstellen.

Die (Meth)Acrylatcopolymerisate und Butadiencopolymerisate (A) können nach den üblichen und bekannten Copolymerisationsverfahren in Masse, Lösung oder Emulsion hergestellt werden. Vorzugsweise werden sie mithilfe der radikalischen Emulsionspolymerisation hergestellt, weil sie dabei in der Form von dispergierten Polymerpartikeln (A) anfallen, die unmittelbar für die Herstellung der erfindungsgemäßen Polymerdispersion eingesetzt werden können.

Dispersionen solcher Polymerpartikel (A) sind übliche und bekannte Produkte und werden beispielsweise von der Firma BASF AG unter der Marke Styronal® und Acronal® für die Papierveredelung vertrieben.

Der Festkörper enthält, jeweils bezogen auf den Festkörper, 1 bis 20 Gew.-%, vorzugsweise 1,5 bis 15 Gew.-% und insbesondere 2 bis 10 Gew.-% mindestens einer, insbesondere einer, Art von in Wasser dispergierbaren Polymerpartikeln (B), die mindestens einen Fluoreszenzfarbstoff enthalten.

Vorzugsweise ist der Fluoreszenzfarbstoff oder sind die Fluoreszenzfarbstoffe in der Matrix der Polymerpartikel (B) molekulardispers verteilt. Vorzugsweise weisen die Fluoreszenzfarbstoffe in der Polymermatrix (B) eine sehr viel höhere Löslichkeit als in der kontinuierlichen wässrigen Phase der erfindungsgemäßen Polymerdispersion auf. Der Gehalt der Polymerpartikel an Fluoreszenzfarbstoffen kann breit variieren und daher optimal den Erfordernissen des Einzelfalls angepasst werden. Vorzugsweise liegt der Gehalt, jeweils bezogen auf die Gesamtmenge der Polymerpartikel (B), bei 0,01 bis 10 Gew.-% und insbesondere 0,01 bis 1 Gew.-%.

Bekanntermaßen sind Fluoreszenzfarbstoffe organische Farbmittel, deren optische Wirkung auf ihrer Fähigkeit beruht, UV-Strahlung oder sichtbares Licht zu absorbieren und als Licht größerer Wellenlänge mit zeitlicher Verzögerung (Phosphoreszenz) oder ohne zeitliche Verzögerung (Fluoreszenz) auszusenden (vgl. DIN 55944 2003-11).

Beispiele geeigneter Fluoreszenzfarbstoffe sind aus der europäischen Patentanmeldung EP 1 801 127 A1, Seite 5, Absatz [0023], bekannt.

Die Teilchengröße der Polymerpartikel (B) kann breit variieren und daher den Erfordernissen des Einzelfalles optimal angepasst werden. Vorzugsweise ist in einer gegebenen erfindungsgemäßen Polymerdispersion die Teilchengröße der Polymerpartikel (B) größer als die Teilchengröße der Polymerpartikel (A). Bevorzugt haben die Polymerpartikel (B) eine durch Lichtstreuung ermittelte volumenmittlere Teilchengröße von 1 bis 100 µm, bevorzugt 1,1 bis 25 µm und insbesondere 1,1 bis 6 µm.

Die Polymerpartikel (B) beziehungsweise ihre wässrigen Dispersionen können nach den unterschiedlichsten üblichen und bekannten Methoden hergestellt werden. Vorzugsweise werden sie durch die radikalische Suspensionspolymerisation ethylenisch ungesättigter Monomere in einer Öl-in-Wasser-Emulsion, deren disperse Phase (Ölphase) mindestens einen Fluoreszenzfarbstoff gelöst enthält und eine durch Lichtstreuung ermittelte mittlere Teilchengröße von mindestens 1 µm aufweist, hergestellt.

Vorzugsweise wird hierbei ein Fluoreszenzfarbstoff verwendet, der in der Ölphase eine sehr viel höhere Löslichkeit hat als in der kontinuierlichen wässrigen Phase der Öl-in-Wasser-Emulsion. Bevorzugt ist die Löslichkeit der Fluoreszenzfarbstoffe in der Ölphase, jeweils bezogen auf die Gesamtmenge der Ölphase, >0,001 Gew.-%, insbesondere >0,01 Gew.-%.

Geeignete ethylenisch ungesättigte Monomere (b) für die Herstellung der Polymerpartikel (B) durch die radikalische Suspensionspolymerisation sind die vorstehend beschriebenen ethylenisch ungesättigten Monomere (a).

Weitere Beispiele geeigneter ethylenisch ungesättigter Monomere (b) sind aus der europäischen Patentanmeldung EP 1 801 127 A1, Seite 4, Absatz [0014], bis Seite 5, Absatz [0025], bekannt. Vorzugsweise wird die radikalische Suspensionspolymerisation mit mindestens einem der dort beschriebenen, hydrophoben ethylenisch ungesättigten Monomere (a), die hier aus Gründen der Systematik als Monomere (b1) bezeichnet werden, durchgeführt. Insbesondere wird die radikalische Suspensionspolymerisation mit einer dort beschriebenen Mischung durchgeführt, die
(a) mindestens ein hydrophobes ethylenisch ungesättigtes Monomer, hier aus Gründen der Systematik als Monomer (b1) bezeichnet, sowie
(b) mindestens ein hydrophiles ethylenisch ungesättigtes Monomer, hier aus Gründen der Systematik als Monomer (b2) bezeichnet, und/oder
(c) mindestens ein vernetztend wirkendes Monomer mit mindestens zwei, insbesondere zwei, ethylenisch ungesättigten Doppelbindungen, hier aus Gründen der Systematik als Monomer (b3) bezeichnet,
   enthält oder hieraus besteht. Besonders vorteilhafte Mengenverhältnisse sind ebenfalls aus der europäischen Patentanmeldung EP 1 801 127 A1, Seite 5, Absätze [0021] und [0022], bekannt.

Vorzugsweise wird die radikalische Suspensionspolymerisation der Monomeren (b) in der Gegenwart mindestens eines Hydrophobs durchgeführt, das die Öl-in-Wasser-Emulsion stabilisiert und die Löslichkeit der Fluoreszenzfarbstoffe in der Ölphase und den hieraus gebildeten Polymerpartikeln (B) signifikant erhöht. Das Hydrophob ist dann als stabilisierender Zusatzstoff (D) in der erfindungsgemäßen Polymerdispersion enthalten. Vorzugsweise hat das Hydrophob bei 25°C und 1013 Hektopascal eine Löslichkeit in Wasser < 0,01 g/l. Seine Menge kann breit variiert und dadurch den Erfordernissen des Einzelfalles optimal angepasst werden. Vorzugsweise wird es in einer Menge von 1 bis 20 Gew.-% , bezogen auf die Monomeren (b), eingesetzt. Beispiele geeigneter Hydrophobe sind ebenfalls aus der europäischen Patentanmeldung EP 1 801 127 A1, Seite 5, Absatz [0025], bis Seite 6, Absatz [0033], bekannt.

Vorzugsweise wird die radikalische Suspensionspolymerisation der Monomeren (b) in der Gegenwart mindestens einer üblichen und bekannten oberflächenaktiven Verbindung durchgeführt, die der Stabilisierung der Öl-in-Wasser-Emulsion dient und die dann als stabilisierender Zusatzstoff (D) in der erfindungsgemäßen Polymerdispersion enthalten ist.

Der Gehalt der Öl-in-Wasser-Emulsion an oberflächenaktiver Verbindung (D) kann breit variieren und daher den Erfordernissen des Einzelfalles optimal angepasst werden. Vorzugsweise wird sie in einer Menge von, jeweils bezogen auf die gesamte Öl-in-Wasser-Emulsion, bis zu 15 Gew.-%, bevorzugt 0,05 bis 15 Gew.% besonders bevorzugt, 0,05 bis 5 Gew.-% und insbesondere 0,1 bis 2 Gew.-%, verwendet. Vorzugsweise wird sie vor dem Emulgieren der wässrigen Phase zugesetzt.

Beispiele geeigneter oberflächenaktiver Verbindungen (D) sind anionische und/oder nichtionische Tenside, amphiphile Polymere, Polymerisate von monoethylenisch ungesättigten Säuren, Pfropfmischpolymerisate von N-Vinylformamid auf Polyalkylenglykolen und zwitterionische Polyalkylenpolyamine, wie sie beispielsweise aus der europäischen Patentanmeldung EP 1 801 127 A1, Seite 6, Absatz [0034], bis Seite 8, Absatz [0043], bekannt sind.

Die radikalische Suspensionspolymerisation der Monomeren (b) wird außerdem vorzugsweise in der Gegenwart mindestens eines, insbesondere eines, Schutzkolloids durchgeführt, das ebenfalls der Stabilisierung der Öl-in-Wasser-Emulsion dient und das dann als stabilisierender Zusatzstoff (D) in der erfindungsgemäßen Polymerdispersion enthalten ist. Beispiele geeigneter Schutzkolloide sind aus Römpp Online 2007, »Schutzkolloid« oder aus der europäischen Patentanmeldung EP 1 801 127 A1, Seite 8, Absätze [0044] bis [0046], bekannt.

Bei der radikalischen Suspensionspolymerisation der Monomeren (b) kann außerdem mindestens ein üblicher und bekannter Polymerisationsregler, vorzugsweise in einer Menge von, jeweils bezogen auf die Monomeren (b), 0,01 bis 5 Gew.-% und insbesondere 0,1 bis 1 Gew.-% verwendet werden. Beispiele geeigneter Polymerisationsregler sind aus der europäischen Patentanmeldung EP 1 801 127 A1, Seite 8, Absatz [0047], bekannt.

Die radikalische Suspensionspolymerisation der Monomeren (b) wird üblicherweise durch mindestens einen, insbesondere einen, üblichen und bekannten radikalischen Polymerisationsinitiator initiiert. Als Polymerisationsinitiator kommen alle Verbindungen in Betracht, die eine Polymerisation auslösen können, wie beispielsweise Peroxide, Hydroperoxide, Azoverbindungen und Redoxkatalysatoren, wie sie aus der internationalen Patentanmeldung WO 99/40123, Seite 32, Zeile 45, bis Seite 34, Zeile 9, bekannt sind.

Zusätzlich oder alternativ zu den Polymerisationsinitiatoren kann die radikalische Suspensionspolymerisation der Monomeren (b) auch durch die Einwirkung aktinischer Strahlung ausgelöst werden, wobei man gegebenenfalls in der Gegenwart mindestens eines üblichen und bekannten, vorzugsweise öllöslichen, Sensibilisators arbeitet. Außerdem kann die radikalische Suspensionspolymerisation auch elektrochemisch, durch Ultraschall oder durch Mikrowellenstrahlung ausgelöst werden.

Die Herstellung der Öl-in-Wasser-Emulsionen bietet keine methodischen Besonderheiten, sondern erfolgt in üblicher und bekannter Weise, beispielsweise indem man mindestens einen Fluoreszenzfarbstoff in einer Mischung aus mindestens einem ethylenisch ungesättigten Monomeren (b) und mindestens einem Hydrophob löst und die resultierende Lösung in einer wässrigen Phase, die mindestens eine oberflächenaktive Verbindung enthält, emulgiert. Hierbei können die üblichen und bekannten Mischaggregate, wie schnell laufende Rührer, Ultraturrax, Inline-Dissolver, Homogenisierungsdüsen, statische Mischer oder Mikrofluidizer, verwendet werden. Es resultieren stabilisierte Öl-in-Wasser-Emulsionen mit einer mittleren Teilchengröße der Öltröpfchen von mindestens 1 bis 100 µm, vorzugsweise 1,1 bis 25 µm und insbesondere 1,1 bis 6 µm.

Vorzugsweise wird die Menge der Ölphase so bemessen, dass eine Dispersion von Polymerpartikeln (B) mit einem Festkörpergehalt von 10 bis 60 Gew.-% bevorzug 20 bis 45 Gew.-% und insbesondere 30 bis 45 Gew.-% resultiert.

Die Temperatur, bei der die radikalische Suspensionspolymerisation durchgeführt wird, kann breit variieren und so hervorragend den Erfordernissen des Einzelfalls angepasst werden. Vorzugsweise wird sie bei 0 bis 120°C durchgeführt, wobei sie bei Temperaturen >100°C unter erhöhtem Druck in einem druckdichten Reaktionsgefäß vorgenommen wird.

Der Festkörper der erfindungsgemäßen Polymerdispersion enthält als weitere wesentliche Komponente mindestens ein, insbesondere ein, Verdickungsmittel (C) in einer Menge von 0,001 bis 3 Gew.-%, insbesondere 0,02 bis 0,3 Gew.-%, jeweils bezogen auf den Festkörper.

Im Grunde kommen alle üblichen und bekannten Verdickungsmittel (C) zur Verwendung in der erfindungsgemäßen Polymerdispersion in Betracht, solange sie nicht mit den anderen Bestandteilen unerwünschte Wechselwirkungen eingehen, die beispielsweise zur Bildung von Ausflockungen führen.

Vorzugsweise wird das Verdickungsmittel (C) aus der Gruppe, bestehend aus pyrogenen Kieselsäuren, Schichtsilikaten, niedermolekularen organischen Naturprodukten und synthetischen Produkten, polymeren und oligomeren organischen Naturprodukten und modifizierten Naturprodukten, vollsynthetischen, polymeren und oligomeren organischen Verdickungsmitteln ohne Tensidcharakter und assoziativen Verdickungsmitteln mit Tensidcharakter, ausgewählt (vgl. a. Römpp Online 2007, »Verdickungsmittel«).

Beispiele geeigneter Schichtsilikate (C) sind Smektite, insbesondere Montmorillonite und Hectorite, sowie Umsetzungsprodukte von Smektiten mit quartären Ammoniumverbindungen, d.h. hydrophobe Organonoschichtsilikate.

Beispiele geeigneter niedermolekularer organischer Naturprodukte und synthetischer Produkte (C) sind Metallseifen, gehärtetes Ricinusöl, modifizierte Fett-Derivate und Polyamide.

Beispiele geeigneter polymerer und oligomerer organischer Naturprodukte (C) sind Stärke, Gelatine, Casein, Gummi arabicum, Xanthan und Gellan.

Beispiele geeigneter polymerer und oligomerer modifizierter organischer Naturprodukte (C) sind Hydroxyethylcellulose (HEC), Carboxymethylcellulose (CMC), Hydroxypropylmethylcellulose (HPMC), Hydroxypropylcellulose (HPC) und Ethylhydroxyethylcellulose (EHEC).

Beispiele geeigneter vollsynthetischer Verdickungsmittel (C) ohne Tensidcharakter, die nicht zur Bildung von Micellen befähigt sind, sind Polyvinylalkohole, Polyacrylsäuren und Polymethylacrylsäuren und deren Salze, Polyacrylamide, Polyvinylpyrrolidon, Polyethylenglykole, Styrol-Maleinsäureanhydrid-Copolymerisate und deren Salze sowie Copolymerisate von Acrylsäure und/oder Methacrylsäure und deren Salze.

Beispiele geeigneter assoziativer Verdickungsmittel (C) mit Tensidcharakter sind hydrophob modifizierte Polyacrylate ("hydrophobically modified alkali swellable emulsions", HASE), hydrophob modifizierte Celluloseether ("hydrophobically modified hydroxyethyl cellulose", HMHEC), hydrophob modifizierte Polyacrylamide ("hydrophobically modified polyacrylamides", HMPAM), hydrophob modifizierte Polyether ("hydrophobically modified polyether", HMP) und assoziative Polyurethan-Verdicker.

Bevorzugt wird das Verdickungsmittel (C) aus der Gruppe, bestehend aus vollsynthetischen polymeren und oligomeren Verdickungsmitteln ohne Tensidcharakter und polymeren und oligomeren organischen Naturprodukten und modifizierten Naturprodukten, ausgewählt.

Insbesondere handelt es sich bei den vollsynthetischen polymeren und oligomeren Verdickungsmitteln (C) ohne Tensidcharakter um Copolymerisate und Terpolymerisate von Acrylsäure und/oder Methacrylsäure mit mindestens einem weiteren ethylenisch ungesättigten Monomer und bei den polymeren und oligomeren organischen Naturprodukten und modifizierten Naturprodukten um Polysaccharide.

Die besonders bevorzugt verwendeten vollsynthetischen Copolymerisate (C) von Acrylsäure und/oder Methacrylsäure mit mindestens einem weiteren ethylenisch ungesättigten Monomer sind übliche und bekannte Verbindungen und werden vorzugsweise in der Form ihrer wässrigen Dispersionen unter der Marke Sterocoll® von der Firma BASF AG oder unter der Marke Viskalex® HV 30 von der Firma Ciba Specialty Chemicals vertrieben.

Die besonders bevorzugt verwendeten Polysaccharide (C) sind Xanthan oder Gellan.

Außer Wasser und dem vorstehend beschriebenen Festkörper, bestehend aus (A), (B) und (C), enthält die erfindungsgemäße Polymerdispersion noch mindestens einen stabilisierenden Zusatzstoff (D) in wirksamen Mengen. Vorzugsweise wird der stabilisierende Zusatzstoff (D) aus der Gruppe, bestehend aus den vorstehend beschriebenen Hydrophoben, oberflächenaktiven Verbindungen und Schutzkolloiden sowie aus Mitteln zur Einstellung des pH-Wertes, Lichtschutzmitteln, UV-Absorbern, niedrig und hoch siedenden organischen Lösemitteln, Polymerisationsinhibitoren, und Antischaummitteln, ausgewählt.

Bevorzugt werden Hydrophobe, oberflächenaktive Verbindungen und Schutzkolloide als stabilisierende Zusatzstoffe (D) verwendet. Insbesondere werden sie über die wässrigen Dispersionen der Polymerpartikel (B) in die erfindungsgemäße Polymerdispersion eingetragen.

Die erfindungsgemäße Polymerdispersion kann nach jedem geeigneten Verfahren hergestellt werden. Vorzugsweise wird sie nach dem erfindungsgemäßen Herstellverfahren I hergestellt, indem man, bezogen auf den Festkörper der Polymerdispersion,
(A) 1 bis 99 Gew.-% mindestens einer Art von in Wasser löslichen und/oder dispergierbaren, insbesondere dispergierbaren, Polymeren,
(B) 1 bis 20 Gew.-% mindestens einer Art von in Wasser dispergierbaren Polymerpartikein, die mindestens einen Fluoreszenzfarbstoff enthalten, und
(C) 0,001 bis 3 Gew.-% mindestens eines Verdickungsmittels sowie
(D) mindestens einen die Polymerdispersion stabilisierenden Zusatzstoff
   in Wasser homogen vermischt.

Bevorzugt werden dabei die Polymeren (A) in der Form einer wässrigen Lösung (A) oder wässrigen Dispersion (A), insbesondere einer wässrigen Dispersion (A), und die Polymerpartikel (B) in der Form einer wässrigen Dispersion (B) eingesetzt.

Besonders bevorzugt wird die Lösung (A) oder die Dispersion (A), insbesondere die Dispersion (A) vorgelegt, wonach die Dispersion (B) zur Vorlage hinzu gegeben wird.

Das Verdickungsmittel (C) kann zur Lösung oder Dispersion (A) und/oder zur Dispersion (B) vor deren Vermischung hinzu gegeben werden; vorzugsweise wird es der Mischung der Lösung (A) oder der Dispersion (A) mit der Dispersion (B) zugesetzt.

Anschließend wird der erfindungsgemäßen Polymerdispersion noch mindestens ein weiterer stabilisierender Zusatzstoff (D), bevorzugt ein Mittel zur Einstellung des pH-Wertes, zugesetzt werden. Besonders bevorzugt wird dabei der pH-Wert der erfindungsgemäßen Polymerdispersion auf 7 bis 9, insbesondere 7 bis 8, eingestellt.

Für das erfindungsgemäße Herstellverfahren I können die vorstehend beschriebenen Mischaggregate verwendet werden.

Der Festkörpergehalt der erfindungsgemäßen Polymerdispersion kann sehr breit varüeren und so den Erfordernissen des jeweiligen Verwendungszwecks hervorragend angepasst werden. Vorzugsweise liegt der Festkörpergehalt bei 10 bis 60 Gew.-%, bevorzugt 15 bis 50 Gew.-% und insbesondere 20 bis 40 Gew.-%.

Die resultierende erfindungsgemäße Polymerdispersion zeigt bei der Lagerung in Ruhe während mindestens 1,5 Monaten, vorzugsweise während mindestens 2 Monaten und insbesondere während mindestens 6 Monaten kein Absetzen. Dies kann in besonders einfacher Weise nachgewiesen werden, indem man die efindungsgemäße Polymerdispersion in einem Standzylinder lagert. Sollten sich Polymerpartikel absetzen, könnte dies sehr genau visuell oder durch die spektroskopische Bestimmung des Konzentrationsgradienten des Fluoreszenzfarbstoffs in Abhängigkeit von der Höhe der Flüssigkeitssäule nachgewiesen werden.

im Rahmen der erfindungsgemäßen Vervvendung können die erfindungsgemäßen Polymerdispersionen als solche als markierte, flüssige funktionale Produkte, insbesondere als Markierungsmittel, Beschichtungsstoffe, Klebstoffe, Dichtungsmassen, Druckfarben, Papierstreichmassen, Papierleimungsmittel oder Ausgangsprodukte für die Herstellung von Formteilen und Folien verwendet werden.

Die flüssigen Markierungsmittel können beispielsweise der Markierung von Flüssigkeiten wie Kraftstoffen dienen. Die flüssigen Beschichtungsstoffe, Klebstoffe, Dichtungsmassen, Druckfarben, Papierstreichmassen, Papierleimungsmittel und Ausgangsprodukte für die Herstellung von Formteilen und Folien können mit Vorteil für die Herstellung von markierten Beschichtungen, Klebschichten, Dichtungen, bedruckten Substraten, veredelten Papierprodukten, Formteilen und Folien verwendet werden.

Vorzugsweise werden die erfindungsgemäßen Polymerdispersionen zur Herstellung von markierten, flüssigen funktionalen Produkten, markierten, festen pulverförmigen funktionalen Produkten und von markierten, festen kompakten funktionalen Produkten, die mindestens einen effektgebenden Zusatzstoff (E) enthalten, verwendet. Bei diesen funktionalen Produkten kann es sich nicht nur um feste oder flüssige Markierungsmittel Beschichtungsstoffe, Klebstoffe, Dichtungsmassen, Druckfarben, Papierstreichmassen, Papierleimungsmittel und Ausgangsprodukte für die Herstellung von Formteilen und Folien handeln, sondern auch um Katalysatoren, Formulierungen von Pflanzenschutzmitteln und kosmetische und pharmazeutische Formulierungen.

Die Auswahl der effektgebenden Zusatzstoffe (E) richtet sich nach dem jeweiligen Verwendungszweck der funktionalen Produkte. Vorzugsweise wird der effektgebende Zusatzstoff (E) aus der Gruppe, bestehend aus thermisch und/oder mit aktinischer Strahlung vernetzbaren Vernetzungsmitteln; thermisch und/oder mit aktinischer Strahlung härtbaren Reaktiverdünnern; von den Fluoreszenzfarbstoffen verschiedenen, in Wasser und/oder in den Polymerpartikeln (A) und/oder (B) löslichen Farbstoffen; Slipadditiven; Katalysatoren für die thermische Vernetzung; thermolabilen radikalischen Initiatoren; Photoinitiatoren; Haftvermittlern; Verlaufmitteln; filmbildenden Hilfsmitteln; Flammschutzmitteln; Korrosionsinhibitoren; Rieselhilfen; Wachsen; Sikkativen; Bioziden; Mattierungsmitteln Entlüftungsmitteln; organischen oder anorganischen, opaken und transparenten Pigmenten; Metallpulvern; organischen und anorganischen, transparenten und opaken Füllstoffen; organischen und anorganischen Nanopartikeln; Wirkstoffen von Pflanzenschutzmitteln; Pharmazeutika und Duftstoffen; ausgewählt.

Bevorzugt wird der effektgebende Zusatzstoff (E) aus der Gruppe, bestehend aus organischen oder anorganischen, opaken und transparenten Pigmenten, insbesondere Farbpigmenten, Effektpigmenten, elektrisch leitfähigen Pigmenten und magnetisch abschirmenden Pigmenten; Metallpulvern; organischen und anorganischen, transparenten und opaken Füllstoffen und organischen und anorganischen Nanopartikeln; ausgewählt.

Beispiele geeigneter Effektpigmente (E) sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente<c bis »Metallpigmente«, und die Patentanmeldungen und Patente DE 36 36 156 A1, DE 37 18446A1,DE3719804A1,DE3930601A1,EP0068311A1,EP0264843A 1,EP0265820A1,EP0283852A1,EP0293746A1,EP0417567A1,US 4,828,826 A oder US 5,244,649 A verwiesen.

Beispiele für geeignete anorganische farbgebende Pigmente (E) sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente (E) sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 pigmente« bis »Pigmentvolumenkonzentrationcc, Seite 563 »Thioindigo-Pigment«. Seite 567 »Titandioxid-Pigmente«, Seiten 400 und 467, »Natürlich vorkommende Pigmente«, Seite 459 »Polycyclische Pigmente«, Seite 52, »AzomethinPigmente«, azopigmente«, und Seite 379, »Metallkomplex-Pigmente<c, vervviesen.

Beispiele für geeignete elektrisch leitfähige Pigmente (E) sind Titandioxid/Zinnoxid-Pigmente.

Beispiele für magnetisch abschirmende Pigmente (E) sind Pigmente auf der Basis von Eisenoxiden oder Chromdioxid.

Beispiele für geeignete Metallpulver (E) sind Pulver aus Metallen und Metallegierungen Aluminium, Zink, Kupfer, Bronze oder Messing.

Beispiele geeigneter organischer und anorganischer Füllstoffe (E) sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Polyamid oder Polyacrylnitril. Ergänzend wird auf Römpp Lexikon Lacke und Druckfarben, Georg Thieme Verlag, 1998, Seiten 250 ff., »Füllstoffe«, verwiesen.

Beispiele geeigneter transparenter Füllstoffe (E) sind solche auf der Basis von Siliziumdioxid, Aluminiumoxid oder Zirkoniumoxid.

Geeignete Nanopartikel (E) werden vorzugsweise aus der Gruppe, bestehend aus Metallen, Verbindungen von Metallen und organischen Verbindungen, ausgewählt.

Vorzugsweise werden die Metalle aus der dritten bis fünften Hauptgruppe, der dritten bis sechsten sowie der ersten und zweiten Nebengruppe des Periodensystems der Elemente sowie den Lanthaniden, und bevorzugt aus der Gruppe, bestehend aus Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, ausgewählt. Insbesondere werden Aluminium und Silizium verwendet.

Vorzugsweise handelt es sich bei den Verbindungen der Metalle um Oxide, Oxidhydrate, Sulfate, Hydroxide oder Phosphate, insbesondere Oxide, Oxidhydrate und Hydroxide.

Beispiele geeigneter organischer Verbindungen sind Lignine und Stärken.

Vorzugsweise weisen Nanopartikel (E) eine Primärpartikelgröße <50, bevorzugt 5 bis 50, insbesondere 10 bis 30 nm, auf.

Die markierten, flüssigen, festen pulverförmigen und festen kompakten funktionalen Produkte, die mindestens einen effektgebenden Zusatzstoff (E) enthalten, können nach üblichen und bekannten geeigneten Verfahren hergestellt werden. Erfindungsgemäß ist es indes von Vorteil, sie nach dem erfindungsgemäßen Herstellverfahren II herzustellen.

Das erfindungsgemäße Herstellverfahren 11 geht von einer erfindungsgemäßen Polymerdispersion, insbesondere einer nach dem erfindungsgemäßen Herstellverfahren I hergestellten erfindungsgemäßen Polymerdispersion, aus. Die erfindungsgemäße Polymerdispersion wird mit mindestens einem der vorstehend beschriebenen effektgebenden Zusatzstoffe (E) homogen vermischt. Dabei kann der effektgebende Zusatzstoff (E) in seiner Gesamtmenge oder portionsweise der erfindungsgemäßen Polymerdispersion zugesetzt werden. Oder die effektgebenden Zusatzstoffe (E) können in ihrer Gesamtmenge oder portionsweise oder nacheinander in ihrer jeweiligen Gesamtmenge oder portionsweise zur erfindungsgemäßen Polymerdispersion hinzu gegeben werden. Umgekehrt kann die erfindungsgemäße Polymerdispersion in ihrer Gesamtmenge oder portionsweise zu dem effektgebenden Zusatzstoff (E) oder den effektgebenden Zusatzstoffen (E) hinzu gegeben werden. Dabei können die vorstehend beschriebenen Mischaggregate verwendet werden.

Bei dem erfindungsgemäßen Herstellverfahren II resultieren markierte, flüssige, mindestens einen effektgebenden Zusatzstoff (E) enthaltende funktionale Produkte, die bereits als solche zur Herstellung von Endprodukten, wie zum Beispiel markierte Treibstoffe, Beschichtungen, Klebschichten, Dichtungen, bedruckte Substrate, veredelte Papierprodukte, Folien, Formteile, Katalysatoren, Pflanzenschutzmittel, Kosmetika und Arzneimittel, eingesetzt werden können.

Die bei dem erfindungsgemäßen Herstellverfahren II resultierenden markierten, flüssigen, mindestens einen effektgebenden Zusatzstoff (E) enthaltenden funktionalen Produkte können aber auch Zwischenprodukte sein, die der Herstellung von markierten, festen pulverförmigen und festen kompakten funktionalen Produkten dienen. Dies kann dadurch erfolgen, dass die flüssigen funktionalen Produkte beispielsweise durch Gefriertrocknung getrocknet werden.

Die dabei anfallenden markierten, festen pulverförmigen funktionalen Produkte können in mindestens einem weiteren Verfahrenschritt in markierte, feste kompakte funktionale Produkte wie Folien und Formkörper umgewandelt werden. Dies kann beispielsweise dadurch erfolgen, dass die markierten, festen pulverförmigen funktionalen Produkte aufgeschmolzen und zu Folien geblasen oder in Formen gegossen und anschließend physikalisch oder thermisch und/oder mit aktinischer Strahlung gehärtet werden.

Die vorstehend beschriebenen funktionalen Produkte sowie die aus ihnen hergestellten Endprodukte weisen hervorragende anwendungstechnische Eigenschaften auf.

### Beispiele und Vergleichsversuch

### Herstellbeispiele 1 bis 8

### Die Herstellung der wässrigen Dispersionen 1 bis 8, enthaltend die Polymerpartikel (B1) bis (B8)

Für die Beispiele und den Vergleichsversuch wurden zunächst die wässrigen Dispersionen 1 bis 8, enthaltend die Polymerpartikel (B1) bis (B8), hergestellt.

### Herstellbeispiel 1: Wässrige Dispersion 1, enthaltend die Polymerpartikel (B1)

In einem 2 1-Kessel mit Dispenserrührer (Durchmesser 5 cm) wurde das folgende Reaktionsgemisch vorgelegt:

| | |
|---|---|
| 450 g | Wasser, |
| 250 g | Polyvinylalkohol [Mowiol® 40/88 (10-prozentig im Wasser)], |
| 2,1 g | Natriumnitrit (2,5-prozentig in Wasser), |
| 30 g | 1,4-Butandioldiacrylat, |
| 270 g | Methylmethacrylat, |
| 0,09 g | roter Fluoreszenzfarbstoff (Lumogen® F-Rot) und |
| 15 g | Weißöl (CAS-Nr. 8042-47-5). |

Das Reaktionsgemisch wurde während 30 Minuten bei Raumtemperatur mit einer Drehzahl von 5.000 U/min dispergiert und dann in einen mit einem Ankerrührer ausgestatteten 2 I-Kessel umgefüllt. Es wurden 2,1 g tert-Butylperpivalat (75-prozentrig gelöst in Isododecan) zugegeben, und das Reaktionsgemisch wurde während einer Stunde auf 60°C aufgeheizt. Das Reaktionsgemisch wurde anschließend während 2 Stunden auf 70°C erwärmt. Anschließend wurde die Temperatur während 30 Minuten auf 85°C erhöht, und das Reaktionsgemisch wurde eine Stunde lang bei dieser Temperatur gehalten. Anschließend wurden 7 g einer 10-prozentigen wässrigen Lösung von tert-Butylhydroperoxid zugegeben. Danach wurde eine Lösung von 0,4 g Ascorbinsäure in 20 g Wasser während einer Stunde zudosiert. Anschließend wurde das Reaktionsgemisch auf Raumtemperatur abgekühlt.

Es resultierte die wässrige Dispersion 1 der vernetzten, mit dem Fluoreszenzfarbstoff markierten Polymerpartikel (B1) einer volumenmittleren Teilchengröße von 1,3 µm und einer breiten Teilchengrößenverteilung (gemessen mithilfe der Lichtstreuanalyse nach der Mie-Theorie mit einem Malvem Mastersizer®, wobei für die Teilchen ein Brechungsindex von 1,49 und ein Absorptionsindex von 0 zu Grunde gelegt wurde). Der Festkörpergehalt lag bei 27,6 Gew.-%.

### Herstellbeispiel 2: Wässrige Dispersion 2, enthaltend die Polymerpartikel (B2)

In einem 2 I-Kessel mit Dispenserrührer (Durchmesser 5 cm) wurde das folgende Reaktionsgemisch vorgelegt:

| | |
|---|---|
| 450 g | Wasser, |
| 250 g | Polyvinylalkohol [Mowiol® 40/88 (10-prozentig im Wasser)], |
| 2,1 g | Natriumnitrit (2,5-prozentig in Wasser), |
| 30 g | 1,4- Butandioldiacrylat, |
| 270 g | Methylmethacrylat, |
| 0,09 g | roter Fluoreszenzfarbstoff (Lumogen® F-Rot) und |
| 15 g | Hexadecan |

Das Emulgieren des Reaktionsgemisches und seine Suspensionspolymerisation erfolgten wie in dem Herstellbeispiel 1 beschrieben.

Es resultierte die wässrige Dispersion 2 der vernetzten, mit dem Fluoreszenzfarbstoff markierten Polymerpartikel (B2) einer volumenmittleren Teilchengröße von 1,9 µm und einer breiten Teilchengrößenverteilung. Der Festkörpergehalt lag bei 33,7 Gew.-%.

### Herstellbeispiel 3: Wässrige Dispersion 3, enthaltend die Polymerpartikel (B3)

In einem 2 1-Kessel mit Dispenserrührer (Durchmesser 5 cm) wurde das folgende Reaktionsgemisch vorgelegt:

| | |
|---|---|
| 450 g | Wasser, |
| 250 g | Polyvinylalkohol [Mowiol® 40/88 (10-prozentig im Wasser)], |
| 2,1 g | Natriumnitrit (2,5-prozentig in Wasser), |
| 30 g | Allylmethacrylat, |
| 270 g | Methylmethacrylat, |
| 0,06 g | gelber Fluoreszenzfarbstoff (Lumogen® F-Gelb 083) und |
| 15 g | Hexadecan |

Das Emulgieren des Reaktionsgemisches und seine Suspensionspolymerisation erfolgten wie in dem Herstellbeispiel 1 beschrieben.

Es resultierte die wässrige Dispersion 3 der vernetzten, mit dem Fluoreszenzfarbstoff markierten Polymerpartikel (B3) einer volumenmittleren Teilchengröße von 2 µm und einer engen Teilchengrößenverteilung mit einer Uniformität von 0,5. Der Festkörpergehalt lag bei 30,85 Gew.-%.

### Herstellbeispiel 4: Wässrige Dispersion 4, enthaltend die Polymerpartikel (B4)

In einem 2 1-Kessel, der mit einem Dispenserrührer (Durchmesser 5 cm) ausgerüstet war, wurde folgendes Reaktionsgemisch vorgelegt:

| | |
|---|---|
| 441,45 g | Wasser, |
| 45 g | Polyvinylalkohol (Mowiol® 15 / 79 (10% in Wasser), |
| 180 g | Methylhydroxypropylcellulose Culminal® MHPC 100 (5% in Wasser), |
| 52.5 mg | NaNO₂, |
| 30 g | Butandioldiacrylat, |
| 270 g | Methylmethacrylat, |
| 0,06 g | Gelber Fluoreszenzfarbsstoff (Lumogen^{®} F-Gelb 083) und |
| 15 g | Hexadekan. |

Das Emulgieren des Reaktionsgemisches und seine Suspensionspolymerisation erfolgten wie in dem Herstellbeispiel 1 beschrieben. Man erhielt eine Dispersion 4 mit vernetzten, mit Fluoreszenzfarbstoff markierten Polymerpartikeln (B4) mit einem mittleren Teilchendurchmesser von 2,6 µm und einer engen Teilchengrößenverteilung mit einer Uniformität von 0,5. Der Feststoffgehalt der Dispersion 4 betrug 29,6 Gew.-%.

### Herstellbeispiel 5: Wässrige Dispersion 5, enthaltend die Polymerpartikel (B5)

In einem 2 I-Kessel mit Dispenserrührer (Durchmesser 5 cm) wurde folgendes Reaktionsgemisch vorgelegt:

| | |
|---|---|
| 502,7 g | Wasser, |
| 30 g | Polyvinylalkohol [Mowiol^{®} 15 / 79 (10 % in Wasser)], |
| 120 g | Methylhydroxypropylcellulose Culminal® MHPC 100 (5 % in Wasser), |
| 52,5 mg | NaNO₂, |
| 120 g | Butandioldiacrylat, |
| 150 g | Methylmethacrylat, |
| 30 g | Methacrylsäure, |
| 0,06 g | Gelber Fluoreszenzfarbstoff (Lumogen^{®} F - Gelb 083), |
| 0,015 g | Hydrochinonmonomethylether und |
| 15 g | Hexadekan. |

Das Emulgieren des Reaktionsgemisches und seine Suspensionspolymerisation erfolgten wie in dem Herstellbeispiel 1 beschrieben .

Man erhielt eine Dispersion 5 mit vernetzten, mit Fluoreszenzfarbstoff markierten Polymerpartikeln (B5) mit einem mittleren Teilchendurchmesser von 4,9 µm. Der Feststoffgehalt der Dispersion 5 betrug 30,3 Gew.-%

### Herstellbeispiel 6: Wässrige Dispersion 6, enthaltend die Polymerpartikel (B6)

In einem 2 I-Kessel mit Dispenserrührer (Durchmesser 5 cm) wurde folgendes Reaktionsgemisch vorgelegt:

| | |
|---|---|
| 450 g | Wasser, |
| 250 g | Polyvinylalkohol [Mowiol^{®} 40 / 88 (10 % in Wasser)], |
| 2,1 g | NaNO₂ (2,5 % in Wasser), |
| 30 g | Allylmethacrylat, |
| 240 g | Methylmethacrylat, |
| 30 g | n-Butylacrylat, |
| 0,09 | Roter Fluoreszenzfarbstoff (Lumogen® F - Rot 305) und |
| 15 g | Hexadekan. |

Das Emulgieren des Reaktionsgemisches und seine Suspensionspolymerisation erfolgten wie in dem Herstellbeispiel 1 beschrieben.

Man erhielt eine Dispersion 6 mit vernetzten, mit Fluoreszenzfarbstoff markierten Polymerpartikeln (B6) mit einem mittleren Teilchendurchmesser von 2,1 µm und einer Uniformität von 0,4. Es wurden 6 g Koagulat gefunden, der Feststoffgehalt der Dispersion 6 betrug 29.9 Gew.-%.

### Herstellbeispiel 7: Wässrige Dispersion 7, enthaltend die Polymerpartikel (B7)

In einem 2 I-Kessel mit Dispenserrührer (Durchmesser 5 cm) wurde folgendes Reaktionsgemisch vorgelegt:

| | |
|---|---|
| 370,1 g | Wasser, |
| 208,3 g | Polyvinylalkohol [Mowiol^{®} 40 / 88 (10 % in Wasser)], |
| 1,75 g | NaNO₂ (2,5 % in Wasser), |
| 25 g | Butandioldiacrylat, |
| 225 g | Methylmethacrylat, |
| 0,75 g | Ethylhexylthioglycolat, |
| 0,08 g | Roter Fluoreszenzfarbstoff (Lumogen^{®} F - Rot 305) und |
| 12,5 g | Hexadekan. |

Das Emulgieren des Reaktionsgemisches und seine Suspensionspolymerisation erfolgten wie in dem Hersteltbeispiel 1 beschrieben.

Man erhielt eine Dispersion 7 mit vernetzten, mit Fluoreszenzfarbstoff markierten Polymerpartikeln (B7) mit einem mittleren Teilchendurchmesser von 1,6 µm und einer Uniformität von 0,4, der Feststoffgehalt der Dispersion 7 betrug 28.3 Gew.-%.

### Herstellbeispiel 8: Wässrige Dispersion 8, enthaltend die Polymerpartikel (B8)

In einem 2 I-Kessel mit Dispenserrührer (Durchmesser 5 cm) wurde folgendes Reaktionsgemisch vorgelegt:

| | |
|---|---|
| 450 g | Wasser, |
| 250 g | Polyvinylalkohol [Mowiol^{®} 40 / 88 (10 % in Wasser)], |
| 2,1 g | NaNO₂ (2,5 % in Wasser), |
| 300 g | Methylmethacrylat, |
| 0,09 g | Roter Fluoreszenzfarbstoff (Lumogen^{®} F - Rot 305) und |
| 15 g | Hexadekan. |

Das Emulgieren des Reaktionsgemisches und seine Suspensionspolymerisation erfolgten wie in dem Herstellbeispiel 1 beschrieben, wobei die Gesamtmenge an tert.-Butylperpivalat in drei gleiche Teile geteilt wurde. Der erste Teil wurde bei 60 °C zugegeben, der zweite Teil bei 65 °C, der dritte bei 70 °C.

Man erhielt eine Dispersion 8 mit unvernetzten, mit Fluoreszenzfarbstoff markierten Polymerpartikeln (B8) mit einem mittleren Teilchendurchmesser von 1,5 µm und einer Uniformität von 0,4, der Feststoffgehalt der Dispersion 8 betrug 31,3 Gew.-%.

### Vergleichsversuch V1

### Die Herstellung einer wässrigen Dispersion V1, enthaltend die Polymerpartikel (B1)

In einem Mischtopf wurden 1,6 kg einer wässrigen Dispersion eines Acrylatcopolymerisats (A) (Acronal® S 728 der Firma BASF AG) vorgelegt. Zur Vorlage wurden 0,103 kg der wässrigen Dispersion 1 des Herstellbeispiels 1 unter intensivem Rühren hinzu gegeben.

Die Brookfield-Viskosität (Spindel Nr. 2) der resultierenden wässrigen Dispersion V1 lag bei 312 mPas.

Die wässrige Dispersion V1 wurde in einen Standzylinder mit einer Füllhöhe von 10 cm eingefüllt. Das Absetzverhalten wurde visuell beurteilt: Bereits nach 3 Wochen war ein Absetzen der gefärbten Polymerpartikel (B1) zu beobachten.

### Beispiele 1 bis 8

### Die Herstellung der mit Fluonsszenziarbstoffen markierten, pigmentfreien, wässrigen Polymerdispersionen 1 bis 8, enthaltend die Polymerpartikel (B1), (B2) oder (B3) sowie Verdickungsmittel (C)

### Allgemeine Versuchsvorschrift:

Es wurde jeweils eine wässrige Dispersion eines Acrylatcopolymerisats (A) vorgelegt. Unter intensivem Rühren wurden zunächst jeweils eine wässrige Dispersion von Polymerpartikeln (B) und anschließend jeweils ein Verdickungsmittel (C) zur Vorlage hinzu gegeben. Nach der Homogenisierung der resultierenden Dispersion während 20 Minuten wurde der pH-Wert mit einer 25-prozentigen Ammoniaklösung auf 7 bis 8 eingestellt. Anschließend wurden die Brookfield-Viskosität (Spindel Nr. 3; 100 U/min) bei Raumtemperatur und die Stabilität der Dispersion in einem Standzylinder mit einer Füllhöhe von 100 cm bestimmt.

Die stoffliche Zusammensetzung der wässrigen Polymerdispersionen 1 bis 8, ihr pH-Wert, ihre Brookfield-Viskosität und ihre Stabilität finden sich in der Tabelle.

**Tabelle: Stoffliche Zusammensetzung, pH-Wert, Brookfield-Viskosität und Stabilität der wässrigen Dispersionen 1 bis 8**

| **Bsp.** | **Stoffliche Zusammensetzung** | | | **pH** | **Viskosität** | **Stabilität** |
|---|---|---|---|---|---|---|
| | **(A)** | **(B)** | **(C)** | | | |
| **Nr.** | **(kg)** | **(kg)** | **(g)** | | **(mPas)** | **(Monat)** |
| 1 | Acronal® S 728^{a)} (1,6) | Dispersion 2 Hstb. 2^{d)} (0,103) | Sterocoll® HT^{f)} (2,27) | 7,9 | 800 | 6 |
| 2 | Acronal® | Dispersion 1 | Sterocoll® | 8 | 574 | 12 |
| | S 728^{a)} (1,6) | Hstb. 1^{c)} (0,103) | HT^{f)} (0,75) | | | |
| 3 | Acronal® S 728^{a)} (1,6) | Dispersion 2 Hstb. 2^{d)} (0,103) | Sterocoll® BL^{g)} (0,75) | 7,9 | 635 | 12 |
| 4 | Acronal® S 728^{a)} (1,6) | Dispersion 1 Hstb. 1 ^{c)} (0,103) | Xanthan (4) | 7 | 755 | 6 |
| 6 | Acronal® S 160^{b)} (1,6) | Dispersion 1 Hstb. 1^{c)} (0,103) | Sterocoll® D^{h)} (0,75) | 7 | 645 | 3 |
| 7 | Acronal® S 160^{b)} (1,6) | Dispersion 3 Hstb. 3^{e)} (0,103) | Viskalex® HV 30ⁱ⁾ (0,75) | 7 | 715 | 2 |
| 8 | Styronal® D 808^{b)} (1,6) | Dispersion 2 Hstb. 2^{d)} (0,103) | Sterocoll® BL ^{g)} (0,75) | 7 | 644 | 6 |

| | | | | | | |
|---|---|---|---|---|---|---|
| a), b) Dispersionen von Acrylatcopolymerisaten der Firma BASF AG; c) Dispersion 1 des Herstellbeispiels 1; d) Dispersion 2 des Herstellbeispiels 2; e) Dispersion 3 des Herstellbeispiels 3; f), g), h) Verdickungsmittel ohne Tensidcharakter der Firma BASF AG auf der Basis von Copolymerisaten der Acrylsäure und/oder Methacrylsäure mit mindestens einem weiteren ethylerisch ungesättigten Monomer; i) Verdickungsmittel ohne Tensidcharakter der Firma Ciba Specialty Chemicals auf der Basis von Copolymerisaten der Acrylsäure und/oder Methacrylsäure mit mindestens einem weiteren ethylerisch ungesättigten Monomer. | | | | | | |

Die Ergebnisse der Tabelle belegen, dass die Polymerdispersionen 1 bis 8 der Beispiele 1 bis 8 eine hervorragende Stabilität aufwiesen. Dabei konnten überraschenderweise Stabilitäten von bis zu 12 Monaten erreicht werden. Die Polymerdispersionen 1 bis 8 konnten somit bis zu ihrer Verwendung sehr lange Zeit gelagert und zu unterschiedlichen Produktionsstätten transportiert werden, wo sie zur Herstellung der unterschiedlichsten markierten funktionalen Produkten, wie zum Beispiel Markierungsmittel, Beschichtungsstoffe, Klebstoffe, Dichtungsmassen, Druckfarben, Papierstreichmassen, Papierleimungsmittel, Ausgangsprodukte zur Herstellung von Formteilen und Folien, Katalysatoren, Formulierungen von Pflanzenschutzmitteln und kosmetische und pharmazeutische Formulierungen, eingesetzt werden konnten. Dabei erwiesen sich die Polymerdispersionen 1 bis 8 als ausgesprochen scherstabil und konnten in den Ringleitungen der Produktionsanlagen problemlos umgepumpt werden. Die aus den Markierungsmitteln, Beschichtungsstoffen, Klebstoffen, Dichtungsmassen, Druckfarben, Papierstreichmassen, Papierleimungsmitteln, Ausgangsprodukten zur Herstellung von Formteilen und Folien, Katalysatoren, Formulierungen von Pflanzenschutzmitteln und kosmetischen und pharmazeutischen Formulierungen hergestellten Folgeprodukte, wie zum Beispiel markierte Treibstoffe, Beschichtungen, Klebschichten, Dichtungen, bedruckte Substrate, veredelte Papierprodukte, Folien, Formteile, Katalysatoren, Pflanzenschutzmittel, Kosmetika und Arzneimittel, wiesen hervorragende anwendungstechnische Eigenschaften auf.

### Beispiele 9 bis 13

### Die Herstellung der mit Fluoreszenzfarbstoffen markierten, pigmentfreien, wässrigen Polymerdispersionen 9 bis 13, enthaltend die Polymerpartikel (B4) bis (B8) sowie ein Verdickungsmittel (C)

Beispiel 3 wurde wiederholt, nur dass anstelle der Dispersion 2 des Herstellbeispiels 2, enthaltend die Polymerpartikel (B2), bei
- Beispiel 9 die Dispersion 4 des Herstellbeispiels 4, enthaltend die Polymerpartikel (B4),
- Beispiel 10 die Dispersion 5 des Herstellbeispiels 5, enthaltend die Polymerpartikel (B5),
- Beispiel 11 die Dispersion 6 des Herstellbeispiels 6, enthaltend die Polymerpartikel (B6),
- Beispiel 12 die Dispersion 7 des Herstellbeispiels 7, enthaltend die Polymerpartikel (B7), und
- Beispiel 13 die Dispersion 8 des Herstellbeispiels 8, enthaltend die Polymerpartikel (B8),
   verwendet wurden. Es wurden die Polymerdispersionen 9 bis 13 erhalten, die Brookfield-Viskositäten zwischen 600 und 800 mPas aufwiesen. Die Polymerdispersionen 9 bis 13 waren ebenfalls mehrere Monate stabil und hervorragend für die bei den Beispielen 1 bis 8 beschriebenen Verwendungszwecke geeignet.

## Patentansprüche

1. Mit Fluoreszenzfarbstoffen markierte wässrige Polymerdispersion mit einer mithilfe der Brookfield-Methode (Spindel Nr. 3, 23°C) ermittelten Viskosität von 500 bis 900 mPas, bestehend aus Wasser sowie aus einem Festkörper, bestehend aus
(A) 1 bis 99 Gew.-% mindestens einer Art von dispergierten Polymerpartikeln mit einer durch Lichtstreuung ermittelten volumenmittleren Teilchengröße von 0,01 bis 1 µm,
(B) 1 bis 20 Gew.-% mindestens einer Art von dispergierten Polymerpartikeln mit einer durch Lichtstreuung ermittelten volumenmittleren Teilchengröße von 1 bis 100 µm, die mindestens einen Fluoreszenzfarbstoff enthalten, und
(C) 0,001 bis 3 Gew.-% mindestens eines Verdickungsmittels, sowie
(D) mindestens einem die wässrige Polymerdispersion stabilisierenden Zusatzstoff, ausgewählt aus der Gruppe, bestehend aus Hydrophoben, oberflächenaktiven Verbindungen, Schutzkolloiden, Mitteln zur Einstellung des pH-Wertes, Lichtschutzmitteln, UV-Adsorbern, niedrig und hochsiedenden organischen Lösemitteln, Polymerisationsinhibitoren und Antischaummitteln.

2. Polymerdispersion nach Anspruch 1, **dadurch gekennzeichnet, dass** die Polymerpartikel (A) (Co)Polymerisate von ethylenisch ungesättigten Monomer sind.

3. Polymerdispersion nach anspruch 1 oder 3, **dadurch gekennzeichnet, dass** der Fluoreszenzfarbstoff molekulardispers in der Matrix der Polymerpartikel (B) gelöst ist.

4. Polymerdispersion nach einem der Ansprüche 1 bis 3, **dadurch gekennzeichnet, dass** die Polymerpartikel (B), bezogen auf ihre Gesamtmenge, 0,001 bis 10 Gew.-% des Fluoreszenzfarbstoffs enthalten.

5. Polymerdispersion nach einem der Ansprüche 1 bis 4, **dadurch gekennzeichnet, dass** die Polymerpartikel (B) durch radikalische Suspensionspolymerisation ethylenisch ungesättigter Monomere in einer Öl-in-Wasser-Emulsion, deren disperse Phase mindestens einen Fluoreszenzfarbstoff gelöst enthält und eine durch Lichtstreuung ermittelte mittlere Teilchengröße von mindestens 1 µm aufweist, erhältlich sind.

6. Polymerdispersion nach Anspruch 5, **dadurch gekennzeichnet, dass** die radikalische Suspensionspolymerisation in der Gegenwart von mindestens einer oberflächenaktiven Verbindung (D), mindestens 0,5 Gew.-%, bezogen auf die ethylenisch ungesättigten Monomere, mindestens eines Hydrophobs (D) und/oder mindestens eines Schutzkolloids (D) durchführbar ist.

7. Polymerdispersion nach Anspruch 5 oder 6, **dadurch gekennzeichnet, dass** die radikalische Suspensionspolymerisation mit mindestens einem hydrophoben ethylenisch ungesättigten Monomere (b1) durchführbar ist.

8. Polymerdispersion nach Anspruch 7, **dadurch gekennzeichnet**, das die radikalische Suspensionspolymerisation mit einer Mischung, die
(b1) mindestens ein hydrophobes ethylenisch ungesättigtes Monomer sowie
(b2) mindestens ein hydrophiles ethylenisch ungesättigtes Monomer und/oder
(b3) mindestens ein vernetztend wirkendes Monomer mit mindestens 2 ethylenisch ungesättigten Doppelbindungen
enthält oder hieraus besteht, durchführbar ist.

9. Polymerdispersion nach einem der Ansprüche 1 bis 8, **dadurch gekennzeichnet, dass** das Verdickungsmittel (C) aus der Gruppe, bestehend aus pyrogenen Kieselsäuren, Schichtsilikaten, niedermolekularen organischen Naturprodukten und synthetischen Produkten, polymeren und oligomeren organischen Naturprodukten und modifizierten Naturprodukten, vollsynthetischen polymeren und oligomeren organischen Verdickungsmitteln ohne Tensidcharakter und assoziativen Verdickungsmitteln mit Tensidcharakter, ausgewählt ist.

10. Polymerdispersion nach einem der Ansprüche 1 bis 9, **dadurch gekennzeichnet, dass** ihr Festkörpergehalt bei 10 bis 60 Gew.-% liegt.

11. Polymerdispersion nach einem der Ansprüche 1 bis 10, **dadurch gekennzeichnet, dass** sie bei ruhender Lagerung in der Ruhe während mindestens 1,5 Monaten kein Absetzen zeigt.

12. Verfahren zur Herstellung einer mit Fluoreszenzfarbstoffen markierten, wässrigen Polymerdispersion gemäß einem der Ansprüche 1 bis 11, **dadurch gekennzeichnet, dass** man, bezogen auf den Festkörper der Polymerdispersion,
(A) 1 bis 99 Gew.-% mindestens einer Art von dispergierten Polymerpartikeln mit einer durch Lichtstreuung ermittelten volumenmittleren Teilchengröße von 0,01 bis 1 µm,
(B) 1 bis 20 Gew.-% mindestens einer Art von dispergierten Polymerpartikeln mit einer durch Lichtstreuung ermittelten volumenmittleren Teilchengröße von 1 bis 100 µm, die mindestens einen Fluoreszenzfarbstoff enthalten, und
(C) 0,001 bis 3 Gew.-% mindestens eines Verdickungsmittels, sowie
(D) mindestens einen die wässrige Polymerdispersion stabilisierenden Zusatzstoff, ausgewählt aus der Gruppe, bestehend aus Hydrophoben, oberflächenaktiven Verbindungen, Schutzkolloiden, Mitteln zur Einstellung des pH-Wertes, Lichtschutzmitteln, UV-Adsorbern, niedrig und hochsiedenden organischen Lösemitteln, Polymerisationsinhibitoren und Antischaummitteln
in Wasser homogen vermischt.

13. Verfahren nach Anspruch 12, **dadurch gekennzeichnet, dass** die Dispersion der Polymerpartikel (A) vorgelegt und die Dispersion der Polymerpartikel (B) zur Vorlage hinzu gegeben wird.

14. Verwendung der mit Fluoreszenzfarbstoffen markierten, wässrigen Polymerdispersion gemäß einem der Ansprüche 1 bis 11 und der nach dem Verfahren gemäß Anspruch 12 oder 13 hergestellten, mit Fluoreszenzfarbstoffen markierten, wässrigen Polymerdispersion als markierte, flüssige funktionale Produkte und zur Herstellung von markierten, flüssigen, festen pulverförmigen oder festen kompakten funktionalen Produkten, die mindestens einen von den stabilisierenden Zusatzstoffen (D) verschiedenen effektgebenden Zusatzstoff (E) enthalten.

15. Verwendung nach Anspruch 14, **dadurch gekennzeichnet, dass** die markierten funktionalen Produkte Markierungsmittel, Beschichtungsstoffe, Klebstoffe, Dichtungsmassen, Druckfarben, Papierstreichmassen, Papierteimungsmittel, Ausgangsprodukte zur Herstellung von Formteilen und Folien, Katalysatoren, Formulierungen von Pflanzenschutzmitteln und kosmetische und pharmazeutische Formulierungen sind.

16. Verwendung nach Anspruch 14 oder 15, **dadurch gekennzeichnet**, das der effektgebenden Zusatzstoff (E) aus der Gruppe, bestehend aus thermisch und/oder mit aktinischer Strahlung vernetzbaren Vernetzungsmitteln; thermisch und/oder mit aktinischer Strahlung härtbaren Reaktiverdünnern; von den Fluoreszenzfarbstoffen (C) verschiedenen, in Wasser und/oder in den Polymerpartikeln (A) und/oder (B) löslichen Farbstoffen-, Slipadditiven; Katalysatoren für die thermische Vernetzung; thermolabilen radikalischen Initiatoren; Photoinitiatoren; Haftvermittlern; Verlaufmittein; filmbildenden Hilfsmitteln; Flammschutzmitteln; Korrosionsinhibitoren; Rieselhilfen; Wachsen; Sikkativen; Bioziden; Mattierungsmitteln Entlüftungsmitteln; organischen oder anorganischen, opaken und transparenten Pigmenten; Metallpulvern; organischen und anorganischen, transparenten und opaken Füllstoffen; organischen und anorganischen Nanopartikeln; Wirkstoffen von Pflanzenschutzmitteln; Pharmazeutika und Duftstoffen; ausgewählt wird.

17. Verwendung nach Anspruch 16, **dadurch gekennzeichnet, dass** die organischen oder anorganischen, opaken und transparenten Pigmente (E) aus der Gruppe, bestehend aus Farbpigmenten, Effektpigmenten, elektrisch leitfähigen Pigmenten und magnetisch abschirmenden Pigmenten, ausgewählt werden.

18. Verfahren zur Herstellung von markierten, flüssigen, festen pulverförmigen und festen kompakten funktionalen Produkten, die mindestens einen effektgebenden Zusatzstoff (E) enthalten, **dadurch gekennzeichnet, dass** man eine mit Fluoreszenzfarbstoffen markierte, wässrige Polymerdispersion gemäß einem der Ansprüche 1 bis 11 oder eine nach dem Verfahren gemäß Anspruch 12 oder 13 hergestellte, mit Fluoreszenzfarbstoffen markierte, wässrige Polymerdispersion mit mindestens einem effektgebenden Zusatzstoff (E) homogen vermischt.

19. Verfahren nach Anspruch 18 zur Herstellung von markierten, festen pulverförmigen und festen kompakten funktionalen Produkten, **dadurch gekennzeichnet, dass** man ein markiertes, flüssiges, mindestens einen effektgebenden Zusatzstoff (E) enthaltendes Zwischenprodukt trocknet.

## Claims

1. An aqueous polymer dispersion marked with fluorescent dyes, having a viscosity of from 500 to 900 mPa·s, determined with the aid of the Brookfield method (spindly No. 3, 23°C), consisting of water and also of a solid, consisting of
(A) from 1 to 99% by weight of at least one type of dispersed polymer particles having a volume-average particle size of from 0.01 to 1 µm, determined by light scattering,
(B) from 1 to 20% by weight of at least one type of dispersed polymer particles having a volume-average particle size of from 1 to 100 µm, determined by light scattering which comprise at least one fluorescent dye and
(C) from 0.001 to 3% by weight of at least one thickeners, and also
(D) at least one additive stabilizing the aqueous polymer dispersion, selected from the group consisting of hydrophobic substances, surface-active compounds, protective colloids, compositions for adjusting the pH, light stabilizers, UV absorbers, low- and high-boiling organic solvents, polymerization inhibitors and antifoams.

2. The polymer dispersion according to claim 1, wherein the polymer particles (A) are (co)polymers of ethylenically unsaturated monomers.

3. The polymer dispersion according to claim 1 or 2, wherein the fluorescent dye is dissolved in molecular disperse form in the matrix of the polymer particles (B).

4. The polymer dispersion according to any one of claims 1 to 3, wherein the polymer particles (B) comprise from 0.001 to 10% by weight of the fluorescent dye, based on their total amount.

5. The polymer dispersion according to any one of claims 1 to 4, wherein the polymer particles (B) are obtainable by free radical suspension polymerization of ethylenically unsaturated monomers in an oil-in-water emulsion whose disperse phase comprises at least one fluorescent dye in solution and has a mean particle size of at least I µm, determined by light scattering.

6. The polymer dispersion according to claim 5, wherein the free radical suspension polymerization can be carried out in the presence of at least one surface-active compound (D), at least 0.5% by weight, based on the ethylenically unsaturated monomers, of at least one hydrophobic substance (D) and/or at least one protective colloid (D).

7. The polymer dispersion according to claim 5 or 6, wherein the free radical suspension polymerization can be carried out with at least one hydrophobic ethylenically unsaturated monomer (b1).

8. The polymer dispersion according to claim 7, wherein the free radical suspension polymerization can be carried out with a mixture which comprises or consists of
(b1) at least one hydrophobic ethylenically unsaturated monomer and also
(b2) at least one hydrophilic ethylenically unsaturated monomer and/or
(b3) at least one crosslinking monomer having at least two ethylenically unsaturated double bonds.

9. The polymer dispersion according to any one of claims 1 to 8, wherein the thickener (C) is selected from the group consisting of pyrogenic silicas, phyllosilicates, low molecular weight organic natural products and synthetic products, polymeric and oligomeric organic natural products and modified natural products, fully synthetic polymeric and oligomeric organic thickeners without a surfactant character and associative thickeners having a surfactant character.

10. The polymer dispersion according to any one of claims 1 to 9, wherein its solids contient is from 10 to 60% by weight.

11. The polymer dispersion according to any one of claims 1 to 10, which shows no settling on storage at rest for at least 1.5 months.

12. A process for the preparation of an aqueous polymer dispersion marked with fluorescent dyes, according to any one of claims 1 to 11, wherein, based on the solids of the polymer dispersion,
(A) from 1 to 99% by weight of at least one type of dispersed polymer particles having a volume-average particle size of from 0.01 to 1 µm, determined by light scattering,
(B) from 1 to 20% by weight of at least one type of dispersed polymer particles having a volume-average particle size of from 1 to 100 µm, determined by light scattering which comprise at least one fluorescent dye and
(C) from 0.001 to 3% by weight of at least one thickener, and also
(D) at least one additive stabilizing the aqueous polymer dispersion, selected from the group consisting of hydrophobic substances, surface-active compounds, protective colloids, compositions for adjusting the pH, light stabilizers, UV absorbers, low- and high-boiling organic solvents, polymerization inhibitors and antifoams
are homogeneously mixed in water.

13. The process according to claim 12, wherein the dispersion of the polymer particles (A) is initially taken and the dispersion of the polymer particles (B) is added to the initially taken dispersion.

14. The use of the aqueous polymer dispersion marked with fluorescent dyes, according to any one of claims 1 to 11, and of the aqueous polymer dispersion prepared by the process according to claim 12 or 13 and marked with fluorescent dyes as marked, liquid functional products and for the production of marked, liquid, solid pulverulent or solid compact functional products which comprise at least one effect-imparting additive (E) differing from the stabilizing additives (D).

15. The use according to claim 14, wherein the marked functional products are marking materials, coating materials, adhesives, sealing compounds, printing inks, paper coating slips, paper sizes, starting materials for the production of shaped articles and films, catalysts, formulations of crop protection agents and cosmetic and pharmaceutical formulations.

16. The use according to claim 14 or 15, wherein the effect-imparting additive (E) is selected from the group consisting of crosslinking agents which are crosslinkable thermally and/or with actinic radiation; reactive diluents which are heat-curable and/or curable with actinic radiation; dyes which differ from the fluorescent dyes (C) and are soluble in water and/or in the polymer particles (A) and/or (B); slip additives; catalysts for thermal crosslinking; thermolabile free radical initiators; photoinitiators; adhesion promoters; leveling agents; film-forming assistants; flameproofing agents; corrosion inhibitors; flow improvers; waxes; siccatives; biocides; dulling agents; deaerating agents; organic or inorganic, opaque and transparent pigments; metal powders; organic and inorganic, transparent and opaque fillers; organic and inorganic nanoparticles; active substances of crop protection agents; pharmaceuticals and fragrances.

17. The use according to claim 16, wherein the organic or inorganic, opaque and transparent pigments (E) are selected from the group consisting of colored pigments, effect pigments, electrically conductive pigments and magnetically shielding pigments.

18. A process for the production of marked, liquid, solid pulverulent and solid compact functional products which comprise at least one effect-imparting additive (E), wherein an aqueous polymer dispersion marked with fluorescent dyes, according to any one of claims 1 to 11, or an aqueous polymer dispersion prepared by the process according to claim 12 or 13 and marked with fluorescent dyes is homogeneously mixed with at least one effect-imparting additive (E).

19. The process according to claim 18 for the production of marked, solid pulverulent and solid compact functional products, wherein a marked, liquid intermediate comprising at least one effect-imparting additive (E) is dried.

## Revendications

1. Dispersion aqueuse de polymères, marquée avec des colorants de fluorescence, 1 présentant une viscosité, déterminée au moyen de la méthode de Brookfield (Mobile Nr. 3, 23°C), de 500 à 900 mPa.s, constituée par de l'eau ainsi que par un solide, constitué par
(A) 1 à 99% en poids d' au moins un type de particules polymères dispersées présentant une grosseur volumique moyenne des particules, déterminée par dispersion de la lumière, 1 de 0,01 à 1 µm,
(B) 1 à 20% en poids d'au moins un type de particules polymères dispersées présentant une grosseur volumique moyenne des particules, 1 déterminée par dispersion de la lumière, 1 de 1 à 100 µm, qui contiennent au moins un colorant de fluorescence, et
(C) 0,001 à 3% en poids d'au moins un épaississait, ainsi que
(D) au moins un additif stabilisant la dispersion aqueuse de polymères, choisi dans le groupe constitué par les substances hydrophobes, les composés tensioactifs, les colloïdes de protection, les agents pour le réglage du pH, les agents de protection contre la lumière, les absorbants des UV, les solvants organiques à point d'ébullition bas et élevé, les inhibiteurs de polymérisation et les antimousses.

2. Dispersion de polymères selon la revendication 1, **caractérisée en ce que** les particules polymères (A) sont des (co)polymères de monomère éthyléniquement insaturé.

3. Dispersion de polymères selon la revendication 1 ou 2, **caractérisée en ce que** le colorant de fluorescence est dissous en dispersion moléculaire dans la matrice des particules polymères (B).

4. Dispersion de polymères selon l'une quelconque des revendications 1 à 3, **caractérisée en ce que** les particules polymères (B), par rapport à leur masse totale, contiennent 0,001 à 10% en poids du colorant de fluorescence.

5. Dispersion de polymères selon l'une quelconque des revendications 1 à 4, **caractérisée en ce que** les particules polymères (B) peuvent être obtenues par polymérisation en suspension par voie radicalaire de monomères éthyléniquement insaturés dans une émulsion huile-dans-eau, dont la phase dispersée contient au moins un colorant de fluorescence sous forme dissoute et présente une grosseur moyenne de particules, déterminée par dispersion de la lumière, d'au moins 1 /µm.

6. Dispersion de polymères selon la revendication 5, **caractérisée en ce que** la polymérisation en suspension par voie radicalaire peut être réalisée en présence d'au moins un composé tensioactif (D), d'au moins 0,5% en poids, par rapport aux monomères éthyléniquement insaturés, d'au moins une substance hydrophobe (D) et/ou d'au moins un colloïde de protection (D).

7. Dispersion de polymères selon la revendication 5 ou 6, **caractérisée en ce que** la polymérisation en suspension par voie radicalaire peut être réalisée avec au moins un monomère éthyléniquement insaturé hydrophobe (b1).

8. Dispersion de polymères selon la revendication 7, **caractérisée en ce que** la polymérisation en suspension par voie radicalaire peut être réalisée avec un mélange qui contient ou qui est constitué par
(b1) au moins un monomère éthyléniquement insaturé hydrophobe et
(b2) au moins un monomère éthyléniquement insaturé hydrophile et/ou
(b3) au moins un monomère avec un effet réticulant, présentant au moins 2 doubles liaisons éthyléniquement insaturées.

9. Dispersion de polymères selon l'une quelconque des revendications 1 à 8, **caractérisée en ce que** l'épaississant (C) est choisi dans le groupe constitué par les silices pyrogènes, les silicates à couches, les produits naturels et les produits synthétiques organiques de bas poids moléculaire, les produits naturels et les produits naturels modifiés organiques polymères et oligomères, les épaississants organiques polymères et oligomères totalement synthétiques sans caractère tensioactif et les épaississants associatifs avec un caractère tensioactif.

10. Dispersion de polymères selon l'une quelconque des revendications 1 à 9, **caractérisée en ce que** sa teneur en solide se situe à 10 jusqu'à 60% en poids.

11. Dispersion de polymères selon l'une quelconque des revendications 1 à 10, **caractérisée en ce qu'**elle ne présente pas de dépôt lors d'un entreposage au repos pendant au moins 1,5 mois.

12. Procédé pour la préparation d'une dispersion aqueuse de polymères marquée par des colorants de fluorescence selon l'une quelconque des revendications 1 à 11, **caractérisé en ce qu'**on mélange de manière homogène, dans l'eau, par rapport au corps solide de la dispersion de polymères,
(A) 1 à 99% en poids d'au moins un type de particules polymères dispersées présentant une grosseur volumique moyenne des particules, déterminée par dispersion de la lumière, de 0,01 à 1 µm,
(B) 1 à 20% en poids d' au moins un type de particules polymères dispersées présentant une grosseur volumique moyenne des particules, déterminée par dispersion de la lumière, de 1 à 7.00 µm, qui contiennent au moins un colorant de fluorescence, et
(C) 0,001 à 3% en poids d'au moins un épaississant, ainsi que
(D) au moins un additif stabilisant la dispersion aqueuse de polymères, choisi dans le groupe constitué par les substances hydrophobes, les composés tensioactifs, les colloïdes de protection, les agents pour le réglage du pH, les agents de protection contre la lumière, les absorbants des UV, les solvants organiques à point d'ébullition bas et élevé, les inhibiteurs de polymérisation et les antimousses.

13. Procédé selon la revendication 12, **caractérisé en ce qu'**on dispose au préalable la dispersion de particules polymères (A) et on ajoute la dispersion des particules polymères (B) à la dispersion disposée au préalable.

14. Utilisation de la dispersion aqueuse de polymères marquée par des colorants de fluorescence selon l'une quelconque des revendications 1 à 11 et de la dispersion aqueuse de polymères marquée par des colorants de fluorescence préparée selon le procédé selon la revendication 12 ou 13, comme produits marqués liquides fonctionnels et pour la préparation de produits marqués, liquides, solides, sous forme de poudre ou solides compacts fonctionnels qui contiennent au moins un additif (E) conférant un effet différent des additifs de stabilisation (D).

15. Utilisation selon la revendication 14, **caractérisée en ce que** les produits marqués fonctionnels sont des agents de marquage, des substances de revêtement, des adhésifs, des masses d'étanchéité, des encres d'imprimerie, des masses de couchage pour papier, des agents d'encollage de papier, des produits de départ pour la préparation de pièces façonnées et de feuilles, des catalyseurs, des formulations d'agents de phytoprotection et des formulations cosmétiques et pharmaceutiques.

16. Utilisation selon la revendication 14 ou 15, **caractérisée en ce que** l'additif conférant un effet (E) est choisi dans le groupe constitué par les réticulants réticulables par voie thermique et/ou par un rayonnement aclinique ; les diluants réactifs durcissables par voie thermique et/ou par une rayonnement actinique ; les colorants différents des colorants de fluorescence (C), solubles dans l'eau et/ou dans les particules polymères (A) et/ou (B) ; les additifs de plissement ; les catalyseurs pour la réticulation thermique ; les initiateurs radicalaires thermolabiles ; les photo-initiateurs ; les promoteurs d'adhérence ; les agents d'étalement ; les adjuvants filmogène les agents ignifuges ; les inhibiteurs de corrosion ; les adjuvants d'écoulement ; les cires ; les agents dessiccateurs ; les biocides ; les agents de matage ; les agents d'aération ; les pigments organiques ou inorganiques, opaques et transparents ; les poudres métalliques ; les charges organiques et inorganiques, transparentes et opaques ; les nanoparticules organiques et inorganiques ; les substances actives d'agents de phytoprotection ; les produits pharmaceutiques et les parfums.

17. Utilisation selon la revendication 16, **caractérisée en ce que** les pigments organiques ou inorganiques, opaques et transparents (E) sont choisis dans le groupe constitué par les pigments colorés, les pigments à effet, les pigments électriquement conducteurs et les pigments à écran magnétique.

18. Procédé pour la préparation de produits marqués, liquides, solides pulvérulentes et solides compacts fonctionnels, qui contiennent au moins un additif conférant un effet (E), **caractérisé en ce qu'**on mélange de manière homogène une dispersion aqueuse de polymères marquée par des colorants de fluorescence selon l'une quelconque des revendications 1 à 11 ou une dispersion aqueuse de polymères marquée par des colorants de fluorescence préparée selon le procédé selon la revendication 12 ou 13, avec au moins un additif (E) conférant un effet.

19. Procédé selon la revendication 18 pour la préparation de produits marqués, solides pulvérulents et solides compacts, fonctionnels, **caractérisé en ce qu'**on sèche un produit intermédiaire marqué, liquide, contenant au moins un additif conférant un effet (E).
